# EUROPÄISCHE PATENTSCHRIFT

(11) **EP 2 771 736 B1**
(45) Veröffentlichungstag und Bekanntmachung des Hinweises auf die Patenterteilung: **24.01.2018**
(21) Anmeldenummer: 12779007.9
(22) Anmeldetag: 16.10.2012
(51) Int. Cl.: G02F 1/1343, G09G 3/16, B42D 25/29, B42D 25/364, G02F 1/155, G02F 1/167, G09F 9/37, G09G 3/34

(54) **ANZEIGEEINRICHTUNG**
DISPLAY DEVICE
DISPOSITIF D'AFFICHAGE

(30) Priorität: 28.10.2011 DE 102011117129
(43) Veröffentlichungstag der Anmeldung: 03.09.2014
(73) Patentinhaber: Leonhard Kurz Stiftung & Co. KG, 90763 Fürth (DE); OVD Kinegram AG, 6301 Zug (CH); PolyIC GmbH & Co. KG, 90763 Fürth (DE)
(72) Erfinder: STAHL, Rainer, 90449 Nürnberg (DE); LUDWIG, Klaus, 91058 Erlangen (DE); SCHAD, Johannes, 90763 Fürth (DE); TOMPKIN, Wayne, Robert, 5400 Baden (CH)
(74) Vertreter: Louis Pöhlau Lohrentz
(86) Internationale Anmeldenummer: PCT/EP2012/070479
(87) Internationale Veröffentlichungsnummer: WO 2013/060599

(56) Entgegenhaltungen:
- US-A- 6 118 426
- US-A1- 2003 179 432
- US-A1- 2010 045 180
- US-A1- 2010 271 408
- US-A1- 2010 277 441

## Beschreibung

Die Erfindung betrifft eine Anzeigeeinrichtung, welche insbesondere in Form eines mehrschichtigen Folienkörpers ausgebildet ist. Die Erfindung betrifft insbesondere eine Anzeigeeinrichtung als Sicherheitselement auf einem Sicherheitsdokument wie z. B. einer Banknote, einem ID-Dokument, einem Wertdokument, Ticket, Gutschein, Lotterieschein oder einem Preisschild.

Zur Anzeige von Informationen ist es bekannt, ein Displaymaterial, insbesondere ein Flüssigkristall-Material zwischen eine obere Elektrode und eine untere Elektrode anzuordnen. Bei Anlegen einer Spannung an die beiden Elektroden werden die im Überlappungsbereich der beiden Elektroden angeordneten Flüssigkristalle entsprechend dem sich ausbildenden elektrischen Feld ausgerichtet, so dass sich in diesem Bereich die optischen Eigenschaften der Anzeigeeinrichtung ändern, was in Verbindung mit oberhalb bzw. unterhalb der Flüssigkristallschicht angeordneten Polarisatoren zur Anzeige einer Information ausgenutzt werden kann.

Der Erfindung liegt nun die Aufgabenstellung zugrunde, eine verbesserte Anzeigeeinrichtung anzugeben.

Diese Aufgabe wird von einer Anzeigevorrichtungen gemäß der anliegenden Ansprüche gelöst. Anstelle des vorhergehend geschilderten Funktionsprinzips, bei dem eine Spannung zwischen zwei auf gegenüberliegenden Seiten der Anzeigenschicht angeordneten Elektroden angelegt wird, sind hier so zum Einen drei Elektroden vorgesehen. Auf der einen Seite der Anzeigenschicht ist eine potentialgetrennte Elektrode vorgesehen und auf der anderen Seite der Anzeigenschicht sind zwei Elektroden vorgesehen, die zur Anzeige einer Information mit einer Energiequelle verbunden werden können. Die Elektroden, die mit der Energiequelle zu verbinden sind, sind damit nicht auf gegenüberliegenden Seiten, sondern auf der gleichen Seite der Anzeigenschicht vorgesehen. Überraschenderweise hat es sich gezeigt, dass bei einer derartigen Anordnung und Ausbildung der Elektroden bei Anlegen einer Spannung zwischen den beiden auf der gleichen Seite angeordneten Elektroden sich zudem eine Ladungstrennung zwischen den Bereichen der potenzialgetrennten Elektrode ergibt, die mit der zweiten Elektrode bzw. der dritten Elektrode überlappen. Diese Ladungstrennung innerhalb der potenzialgetrennten Elektrode führt in den Bereichen der Überlappung mit der zweiten Elektrode bzw. der dritten Elektrode zu einem elektrischen Feld, welches senkrecht zu der von der Anzeigenschicht aufgespannten Ebene orientiert ist. Es wird dadurch ermöglicht, die für den Anschluss der Energiequelle bestimmten Elektroden der Anzeigeeinrichtung lediglich auf einer Seite der Anzeigeeinrichtung vorzusehen und weiter durch das Anlegen einer Spannung zwischen zwei Elektroden zwei gegebenenfalls unterschiedlich ausgeformte Bereiche zu erzielen, in denen das Displaymaterial der Anzeigenschicht einem unterschiedlich orientierten Feld ausgesetzt ist. Dies kann - wie im Folgenden auch detailliert erläutert - dazu ausgenutzt werden, mit geringem schaltungstechnischem Aufwand interessante und komplexe optische Effekte zu generieren. Durch die Erfindung wird so der Vorteil erzielt, eine kostengünstige Massenfertigung von Anzeigeeinrichtungen zu ermöglichen und komplexe Informationen mit geringem schaltungstechnischem Aufwand mittels einer Anzeigeeinrichtung anzuzeigen.

Eine potenzialgetrennte Elektrode wird insbesondere von einer Elektrode aus einem elektrisch leitfähigen Material gebildet, welche nicht galvanisch mit einem externen elektrischen Potenzial, beispielsweise einer Stromquelle oder Spannungsquelle, verbunden ist und damit "floated". Die erste Elektrode ist so insbesondere weder mit einer Stromquelle oder einer Spannungsquelle galvanisch verbunden, noch mit Verbindungselementen galvanisch verbunden, die zum Anschluss einer Strom- oder Spannungsquelle oder einer elektrischen Steuerschaltung dienen.

Vorzugsweise ist die erste Elektrode mittels einer oder mehrerer dielektrischer Schichten gekapselt und vorzugsweise allseits von dielektrischen Schichten umgeben, die einen Ladungszufluss bzw. einen Ladungsabfluss von der ersten Elektrode verhindern oder zumindest wesentlich erschweren. Vorzugsweise beträgt der durch die dielektrischen Schichten bereitgestellte Widerstand zwischen der ersten Elektrode und einer an die dielektrischen Schichten angrenzenden elektrisch leitfähigen Schichten mehr als 10 Megaohm, weiter bevorzug mehr als 100 Megaohm bei Verwendung kapazitiver Displays wie z. B. elektrophoretischen Displays. Bei Einsatz stromgetriebener Displays wie z. B. elektrochromer Displays beträgt der durch die dielektrischen Schichten bereitgestellte Widerstand zwischen der ersten Elektrode und einer an die dielektrischen Schichten angrenzenden elektrisch leitfähigen Schichten vorzugsweise mehr als 10 Kiloohm, weiter bevorzug mehr als 50 Kiloohm

Vorzugsweise ist die der Anzeigenschicht abgewandte Seite der ersten Elektrode sowie die Flanken der ersten Elektrode von einem dielektrischen Material bedeckt, beispielsweise von einer dielektrischen Lackschicht oder einer dielektrischen Kunststofffolie bedeckt. Vorzugsweise ist zumindest die der ersten Elektrode zugewandte Seite der Anzeigenschicht aus einem dielektrischen Material gebildet oder zwischen der Anzeigenschicht und der ersten Elektrode eine dielektrische Schicht angeordnet, welche die Unterseite der ersten Elektrode gegenüber elektrisch leitfähigen Schichten der Anzeigeeinrichtung isoliert.

Unter dielektrischer Schicht oder einem dielektrischen Material wird eine Schicht bzw. ein Material verstanden, dessen Flächenwiderstand größer als 10 Megaohm weiter bevorzugt größer als 100 Megaohm ist.

Gemäß einem bevorzugten Ausführungsbeispiel der Erfindung weist die Anzeigeeinrichtung eine Strom- bzw. Spannungsquelle und/oder eine elektrische Steuerschaltung auf, wobei die zweite und dritte Elektrode, nicht jedoch die erste Elektrode über ein Verbindungselement mit der Energiequelle bzw. Steuerschaltung galvanisch verbunden ist. Vorzugsweise wird die Energiequelle von einem Piezoelement, einer Solarzelle, einer Batterie und/oder einer Antenne gebildet. Ein Piezoelement besteht hier vorzugsweise aus einer Schicht aus einem Piezo-Material, welche beidseitig mit Elektroden versehen ist und welche beim Verbiegen einen von der Verbiegerichtung abhängigen Spannungsimpuls generiert. Wird eine Antenne als Energiequelle eingesetzt, so ist vorzugsweise die Antenne mit einem Gleichrichter und ggf. einem Speicherkondensator verbunden, welcher die von der Antenne absorbierte HF-Energie speichert. Die induktive Einkopplung von Energie in die Antenne erfolgt vorzugsweise mittels einer externen Energiequelle wie z. B. einem RF-Lesegerät, RF-Transceiver oder Mobiltelefon. Bei Verwendung einer Solarzelle, einer Batterie und/oder einer Antenne als Energiequelle kann es auch vorteilhaft sein, die Polarität der Energiequelle mittels eines in die Anzeigeeinrichtung integrierten Schalters umzuschalten.

Gemäß einem bevorzugten Ausführungsbeispiel der Erfindung ist das Displaymaterial so ausgebildet, dass es bei Anlegen einer Spannung zwischen der zweiten und dritten Elektrode in dem Überlappungsbereich der ersten und zweiten Elektrode und im Überlappungsbereich der ersten und dritten Elektrode unterschiedliche optische Eigenschaften zeigt, insbesondere unterschiedliche Farben zeigt. Bei Anlegen einer Spannung an die zweite und dritte Elektrode zeigen die beiden Bereiche so ein unterschiedliches optisches Erscheinungsbild, beispielsweise erscheint der eine Bereich weiß, der andere Bereich schwarz. Bei Invertieren der anliegenden Spannung wird der konträre Effekt bewirkt, das heißt, dass beispielsweise der eine Bereich schwarz und der andere Bereich weiß erscheint. Damit lassen sich auf einfache Weise durch die Ausformung der zweiten und dritten Elektroden nur durch Bereitstellung eines Elektrodenpaares zwei unterschiedliche optische Informationen generieren, für die bei dem oben geschilderten bekannten Funktionsprinzip zwei Elektrodenpaare sowie eine entsprechende Steuerschaltung erforderlich wären.

Das Displaymaterial weist bevorzugt eine Vielzahl von elektrisch geladenen Teilchen auf, die in einer Flüssigkeit dispergiert sind, wobei sich die Flüssigkeit und die Teilchen in ihren optischen Eigenschaften unterscheiden, insbesondere in ihrer Farbe unterscheiden. Bei Anlegen eines elektrischen Feldes sind an der Oberseite des Displaymaterials so entweder die elektrisch geladenen Teilchen oder die Flüssigkeit sichtbar, so dass je nach Polarität des elektrischen Feldes das Displaymaterial die optischen Eigenschaften der Teilchen oder der Flüssigkeit zeigt.

Gemäß einer weiteren bevorzugten Ausführungsvariante weist das Displaymaterial eine Vielzahl von ersten Teilchen und eine Vielzahl von zweiten Teilchen auf, wobei die ersten Teilchen sich von den zweiten Teilchen in Bezug auf ihre elektrische Ladung und in Bezug auf ihre optischen Eigenschaften unterscheiden. Insbesondere sind so die ersten Teilchen positiv geladen und die zweiten Teilchen negativ geladen. Die ersten und zweiten Teilchen sind weiter vorzugsweise in einer Flüssigkeit dispergiert, deren optische Eigenschaften sich weiter ebenfalls von den optischen Eigenschaften der ersten Teilchen und zweiten Teilchen unterscheiden können. Die ersten und zweiten Teilchen zeigen bevorzugt bei Betrachtung in Reflexion unterschiedliche optische Eigenschaften und unterscheiden sich insbesondere in ihrer Farbe, im Reflexionsgrad oder in ihrem Streuverhalten.

In beiden oben beschriebenen Ausführungsvarianten können die geladenen Teilchen sowie die Flüssigkeit sowohl in sphärischen Mikropartikeln oder in kammerartigen Strukturen verkapselt sein.

Weiter ist es jedoch auch möglich, dass das Displaymaterial von einem elektrochromen Material, einem Liquid Powder Display Material, einem PDLC-Material (Polymer Dispersed Liquid Crystal), einem Flüssigkristallmaterial, insbesondere einem cholesterischen Flüssigkristallmaterial, oder einem Interferenzschichtmaterial (interferometric modulation display material) gebildet ist.

Die erste, zweite und/oder dritte Elektrode sind bevorzugt transparent ausgebildet. Unter transparente Elektrode wird hierbei insbesondere eine Elektrode verstanden, welche für den menschlichen Betrachter aus einem üblichen Betrachtungsabstand transparent erscheint. Die Elektroden können so beispielsweise aus einem transparenten leitfähigen Material, beispielsweise Indium Zinn Oxid (ITO) oder einem anderen transparenten leitfähigen Oxid (z. B. Aluminium Zink Oxid, AZO) oder aus einem leitfähigen organischen Material wie z. B. PEDOT, Graphene oder Carbon Nanotubes, bestehen, oder aus einem an sich opaken, elektrisch leitfähigen Material bestehen, welches entsprechend substrukturiert ist, beispielsweise in Form eines ein- oder mehrdimensionalen Gitters ausgebildet ist, dessen Gitterlinien unterhalb des Auflösungsvermögens des menschlichen Auges liegen und insbesondere eine Breite von weniger als 100 µm, bevorzugt weniger als 20 µm aufweisen.

Die zweite und dritte Elektrode sind bevorzugt aus einem metallischen leitfähigen Material gebildet. Als Metalle kommen insbesondere Aluminium, Gold, Kupfer, Silber, Chrom in Frage.

Gemäß einer weiteren bevorzugten Ausführungsvariante besteht die erste Elektrode aus einem metallischen leitfähigen Material und die zweite und dritte Elektrode sind jeweils aus einem transparenten leitfähigen Material gebildet.

Bevorzugt überlappt die erste Elektrode bei Betrachtung senkrecht zu der von der Anzeigenschicht aufgespannten Ebene die zweite und dritte Elektrode vollflächig, so dass der "aktive" Bereich der Anzeigenschicht durch die Ausformung der zweiten und dritten Elektrode bestimmt wird. Es ist jedoch auch möglich, dass die "aktiven" Bereiche der Anzeigenschicht zusätzlich auch durch die Strukturierung der ersten Schicht beeinflusst werden, um so beispielsweise Teilbereiche der zweiten und dritten Elektrode in Bezug auf ihre optische Wirkung zu deaktivieren und damit beispielsweise nicht Bildmotiven zugeordnete Bereiche der Elektroden optisch zu deaktivieren.

Weiter ist es auch möglich, dass das Displaymaterial entweder vollflächig im gesamten ersten Bereich vorgesehen ist oder ebenfalls strukturiert nur in ausgewählten Bereichen des ersten Bereichs vorgesehen ist, um so beispielsweise die oben beschriebenen Effekte zu erzielen.

Gemäß einer bevorzugten Ausführungsvariante sind die zweite und dritte Elektrode in einer Ebene angeordnet und insbesondere von galvanisch getrennten Bereichen einer gemeinsamen elektrisch leitfähigen Schicht gebildet. Diese Vorgehensweise hat den Vorteil, dass lediglich eine einzige elektrisch leitfähige Schicht zur Ausbildung der zweiten und dritten Elektrode aufgebracht und strukturiert werden muss, wodurch sich eine besonders kostengünstige Herstellung ergibt.

Gemäß einem weiteren bevorzugten Ausführungsbeispiel der Erfindung unterscheiden sich die zweite und dritte Elektrode in ihrer Beabstandung zu der von der ersten Elektrode aufgespannten Ebene. Die zweite und dritte Elektrode sind insbesondere von zwei unterschiedlichen elektrisch leitfähigen Schichten gebildet, die voneinander in Bezug auf die Normale zu der von der ersten Elektrode aufgespannten Ebene beabstandet sind. Hierbei ist vorzugsweise zwischen der zweiten und der dritten Elektrode eine dielektrische Schicht angeordnet. Durch diese Ausführungsform erhöht sich zwar der Herstellungsaufwand. Andererseits hat es sich gezeigt, dass durch eine derartige Anordnung vielerlei Vorteile erzielt werden können. So ist es beispielsweise möglich, die Kontraststärke der Anzeigeeinrichtung zu erhöhen. So ist es möglich, hierdurch zu realisieren, dass erste Überlappungsbereiche, in denen die erste Elektrode mit der zweiten Elektrode überlappt, und zweite Überlappungsbereiche, in denen die erste Elektrode mit der dritten Elektrode überlappt, unmittelbar aufeinander folgend angeordnet werden, was bei der vorhergehenden Variante aufgrund des notwendigen "Isolationsgrabens" zwischen der zweiten und der dritten Elektrode nicht möglich ist. Es ist damit möglich, zwei Bereiche, welche bei Anlegen einer Spannung an eine zweite und dritte Elektrode unterschiedliche optische Eigenschaften zeigen, unmittelbar nebeneinander anzuordnen und einen unklaren "Anzeigezustand" aufweisende Zwischenbereiche zu vermeiden. Im Falle eines "Isolationsgrabens" zwischen der zweiten und der dritten Elektrode ist das Displaymaterial in diesem Bereich keinem oder einem undefinierten elektrischen Feld ausgesetzt, was zu einem unklaren "Anzeigezustand" führen kann.

Bei dieser Ausführungsform ist es zum einen möglich, dass die dritte Elektrode und die zweite Elektrode sich in Bezug auf die von der Anzeigenschicht aufgespannte Ebene vollständig überlappen. Hierdurch können Kostenvorteile erzielt werden, da eine passergenaue Strukturierung der zweiten Elektrode zur dritten Elektrode nicht erforderlich ist.

Weiter ist es vorteilhaft, wenn die zweite Elektrode zwischen der ersten Elektrode und der dritten Elektrode angeordnet ist und sich die zweite Elektrode und die dritte Elektrode lediglich bereichsweise überlappen, insbesondere weniger als 50 % und weiter bevorzugt weniger als 25 % überlappen. Durch diese Vorgehensweise kann das Anzeigenergebnis verbessert werden, da die zwischen der zweiten und dritten Elektrode entstehenden Kapazitäten und die dadurch bedingte Schwächung des Feldverlaufs zwischen der zweiten und ersten und dritten und ersten Elektrode verringert werden. Vorzugsweise überlappen die zweiten und dritten Elektroden hierbei lediglich in dem Grenzbereich zwischen zweiter und dritter Elektrode, um so einerseits die oben beschriebenen Vorteil bezüglich einer erhöhten Kontraststärke und andererseits die oben beschriebenen Vorteile bezüglich einer Verringerung der kapazitiven Last zu erzielen.

Vorzugsweise beträgt der Abstand zwischen der dritten Elektrode und der zweiten Elektrode zwischen 1 % und 25 % des Abstands zwischen der zweiten Elektrode und der ersten Elektrode.

Vorzugsweise ist der Abstand zwischen der ersten und zweite Elektrode, der Abstand zwischen der ersten und dritten Elektrode und der Abstand zwischen der zweiten und dritten Elektrode so gewählt, dass c23 kleiner als 1/(1/c12+1/c13) ist, wobei c12 die Kapazität zwischen der ersten und zweiten Elektrode, c13 die Kapazität zwischen der ersten und dritten Elektrode und c23 die Kapazität zwischen der zweiten und dritten Elektrode ist.

Weiter ist es auch möglich, dass auch bei dieser Ausführungsform die zweiten und dritten Elektroden in Bezug auf die von der Anzeigenschicht aufgespannte Ebene sich nicht überlappen.

Die erste, zweite und dritte Elektrode sind vorzugsweise parallel zueinander angeordnet.

Gemäß einer weiteren bevorzugten Ausführungsform ist die dritte Elektrode nicht als plane Fläche ausgebildet, sondern weist ein Höhenprofil mit Erhebungen und Vertiefungen auf. Hierzu wird beispielsweise in eine Replizierlackschicht ein entsprechendes Oberflächenrelief abgeprägt und anschließend eine die dritte Elektrode ausbildende elektrisch leitfähige Schicht aufgebracht oder ein entsprechendes Oberflächenrelief in einen Mehrschichtkörper umfassend eine elektrisch leitfähige Schicht und eine Replizierlackschicht abgeformt. Die Höhendifferenz zwischen Erhebungen und Vertiefungen (Profiltiefe) beträgt hierbei vorzugsweise 1 µm bis 25 µm, weiter bevorzugt zwischen 5 µm und 10 µm.

Vorzugsweise sind die Vertiefungen der dritten Elektrode im Bereich der zweiten Elektrode angeordnet. Hierdurch wird der Vorteil erzielt, dass in diesem Bereich der Abstand zwischen der zweiten und dritten Elektrode erhöht wird und damit die durch die Überlappung der zweiten und dritten Elektrode generierte kapazitive Last verringert wird. Das Relief ist so vorzugsweise passergenau zu der zweiten Elektrode bzw. der Strukturierung der die zweite Elektrode ausbildenden elektrisch leitfähigen Schicht abgeformt. Vorzugsweise ist das Oberflächenrelief hierbei so gewählt, dass im Bereich der zweiten Elektrode der Abstand zwischen der ersten Elektrode und der dritten Elektrode größer ist als in den Bereichen, in denen die dritte Elektrode, nicht jedoch die zweite Elektrode vorgesehen ist. Vorzugsweise sind so im Bereich der zweiten Elektrode Vertiefungen und in dem nicht von der zweiten Elektrode belegten Bereich des ersten Bereichs Erhebungen in der dritten Elektrode vorgesehen. Um die erforderliche Profiltiefe zu reduzieren kann es vorteilhaft sein, die Bereiche der Vertiefungen mit einem Material niedrigerer Dielektrizität zu verfüllen als die Bereiche der Erhebungen.

Vorzugsweise ist hierbei d1 etwa d2 und d3 deutlich größer als d2, wobei d1 der Abstand zwischen der ersten Elektrode und der zweiten Elektrode, d2 der Abstand zwischen der ersten Elektrode und den Erhebungen der dritten Elektrode und d3 der Abstand zwischen der ersten Elektrode und den Vertiefungen der dritten Elektrode ist. d1 und d2 unterscheiden sich so vorzugsweise um nicht mehr als 20 % und die Differenz zwischen d3 und d1ist vorzugsweise um den Faktor 3, weiter bevorzugt um den Faktor 5, größer als die Differenz zwischen d2 und d1.

Durch die oben geschilderten Ausführungsformen lassen sich insbesondere die im Folgenden beschriebenen optischen Effekte realisieren:
Gemäß einer bevorzugten Ausführungsform ist die zweite Elektrode in Form eines im ersten Bereiches angeordneten Motivs ausgeformt und die dritte Elektrode in Betrachtung senkrecht zu der von der Anzeigenschicht aufgespannten Ebene zumindest in einem Hintergrundbereich des Motivs vorgesehen. Bei einem Polaritätswechsel der an der zweiten und dritten Elektrode anliegenden Spannung ergibt sich so insbesondere eine invertierte Darstellung des Motivs. Ein Motiv kann hier beispielsweise von ein oder mehreren Zahlen und Buchstaben, Symbolen, graphischen Darstellungen usw. gebildet werden. Die dritte Elektrode kann hierbei vollflächig im gesamten ersten Bereich vorgesehen sein oder als Hintergrund in dem nicht von der zweiten Elektrode belegten Bereich des ersten Bereichs vorgesehen sein oder in Form eines ein weiteres Motiv aufweisenden Hintergrunds zu dem in der zweiten Elektrode ausgeformten Motiv vorgesehen sein.

Weiter ist es auch möglich, dass die zweite Elektrode in Form eines weiteren Motivs ausgeformt ist.

Vorzugsweise ist das Motiv hierbei aus mehreren Teilmotiven aufgebaut. Die zweite und/oder dritte Elektrode weist hierbei mehrere durch Leiterbahnen verbundene Teilelektroden auf, die jeweils in Form eines Teilmotivs oder eines Hintergrunds zu einem der Teilmotive ausgeformt sind. Die die Teilelektroden verbindende Leiterbahn weist vorzugsweise eine Breite von weniger als 300 µm vorzugsweise weniger als 100 µm auf. Dabei kann es auch vorgesehen sein, die Teilelektroden durch die Leiterbahnen nicht untereinander sondern mit mehreren unabhängigen Energiequellen zu verbinden. Dadurch wird eine Redundanz geschaffen, die gewährleistet, dass bei Ausfall einer Leiterbahn nicht die komplette Anzeigeeinrichtung funktionslos wird.

Gemäß einem bevorzugten Ausführungsbeispiel sind die zweite und dritte Elektrode so ausgeformt und angeordnet, dass bei einem Polaritätswechsel der an der zweiten und dritten Elektrode anliegenden Spannung ein Bewegungseffekt generiert wird und sich insbesondere die Illusion einer Bewegung eines Objekts als optischer Effekt zeigt. So ist es beispielsweise möglich, zwei ineinander gerastete Motive, insbesondere gleichartige Motive vorzusehen, wobei das erste Motiv durch Überlappungsbereiche der ersten Elektrode und der zweiten Elektrode und das zweite Motiv durch Überlappungsbereiche der ersten Elektrode und der dritten Elektrode gebildet ist. Hierzu ist vorzugsweise die zweite Elektrode - wie bereits oben ausgeführt - aus mehreren miteinander galvanisch verbundenen Teilelektroden vorgesehen, welche das erste Motiv ausbilden. Die dritte Elektrode ist entweder hinter diesem Bereich vollflächig in Form des Motivs ausgebildet oder ebenfalls aus mehreren galvanisch miteinander verbundenen Teilelektroden ausgebildet, die zumindest teilweise zwischen den Teilelektroden der zweiten Elektrode vorgesehen sind. Weiter ist es hierzu möglich, dass die zweite und/oder dritte Elektrode jeweils Teilelektroden aufweist, die jeweils in Form eines Segments eines insbesondere rotationssymmetrischen Objekts ausgeformt sind, wobei abwechselnd Teilelektroden oder Bereiche der zweiten und dritten Elektrode angeordnet sind. Hierdurch kann eine Drehbewegung des Objekts als optischer Bewegungseffekt generiert werden. Anstelle der Strukturierung der dritten Elektrode in Form von Teilelektroden ist es hierbei ebenfalls möglich, dass die dritte Elektrode vollflächig im gesamten Bereich des Objekts vorgesehen ist und damit die Segmente zwischen den Teilelektroden der zweiten Elektrode ebenfalls mit der dritten Elektrode bedeckt sind.

Gemäß einem weiteren bevorzugten Ausführungsbeispiel der Erfindung werden die zweiten und/oder dritten Elektroden so ausgeformt und angeordnet, dass bei einem Polaritätswechsel der an der zweiten oder dritten Elektrode anliegenden Spannung der Effekt eines invertierenden Graustufenbilds generiert wird.

Vorzugsweise weist die zweite Elektrode mehrere durch Leiterbahnen verbundene Teilelektroden auf, die gemäß einem ein- oder zweidimensionalen Raster mit einer Rasterweite von weniger als 300 µm, bevorzugt weniger als 200 µm und weiter bevorzugt weniger als 100 µm, angeordnet sind. Die Teilelektroden besitzen insbesondere jeweils eine punktförmige oder linienförmige Formgebung. Weiter sind bevorzugt die Breite der Teilelektroden oder die Rasterabstände zur Generierung eines Graustufenbildes variiert. Die dritte Elektrode ist hierbei vorzugsweise vollflächig in dem Bereich des Graustufenbildes ausgebildet oder in Form eines inversen Musters zur zweiten Elektrode ausgebildet. Für den menschlichen Betrachter vermischen sich so die von den ersten Überlappungsbereichen (Überlappungsbereich zwischen erster Elektrode und zweiter Elektrode) und zweiten Überlappungsbereichen (Überlappungsbereich zwischen erster Elektrode und dritter Elektrode) generierten optischen Effekte, so dass der Betrachter einen von der Flächenbelegungsdichte der zweiten Teilelektrode in dem jeweiligen Bildpunkt generierten Grauwert wahrnimmt.

Unter Grauwert ist hierbei auch eine Mischfarbe zwischen den in den unterschiedlichen Zuständen des Displaymaterials erzeugten Farben zu verstehen. Werden so beispielsweise von dem Displaymaterial bei Anlegen einer Spannung zwischen der zweiten und der dritten Elektrode in dem ersten Überlappungsbereich eine weiße Farbe und in dem zweiten Überlappungsbereich eine schwarze Farbe generiert, so ergibt sich ein Graustufenbild im klassischen Sinne. Wird bei der Anlegung einer Spannung zwischen der zweiten und dritten Elektrode in dem ersten Überlappungsbereich eine erste Primärfarbe, beispielsweise rot, und in dem zweiten Überlappungsbereich eine zweite Primärfarbe, beispielsweise blau, generiert, so werden unter den Graustufen des generierten Graustufenbildes die sich aus der Mischung dieser beiden Farben je nach Anteil der beiden Farben ergebenden Mischfarben verstanden, welche auf der diese beiden Primärfarben im Spektralfarbenbezug der Farbtafel verbindenden Geraden liegen. Unter einem Graustufenbild ist demnach auch ein aus solchen Mischfarben aufgebautes Bild zu verstehen.

Vorzugsweise handelt es sich bei dem Raster um ein geometrisch transformiertes Raster. Die Teilelektroden weisen so beispielsweise eine wellenlinienförmige Formgebung auf. Weiter ist das Raster vorzugsweise als eindimensionales Raster, insbesondere als Linienraster ausgebildet. Hierdurch ergeben sich insbesondere Vorzüge bezüglich der galvanischen Kontaktierung der Teilelektroden.

Vorzugsweise sind die Teilelektroden mittels einer Vielzahl von Verbindungsbahnen miteinander verbunden, die vorzugsweise gemäß einem weiteren regelmäßigen oder unregelmäßigen Raster angeordnet sind.

Gemäß einem weiteren bevorzugten Ausführungsbeispiel der Erfindung weist die Anzeigeeinrichtung eine vierte Elektrode auf, wobei die zweite und die vierte Elektrode zwischen der ersten und der dritten Elektrode angeordnet ist und die erste und die vierte Elektrode sich bei Betrachtung senkrecht zu einer von der Anzeigenschicht aufgespannten Ebene zumindest bereichsweise überlappen. So werden die zweite und die vierte Elektrode beispielsweise von galvanisch voneinander getrennten Teilbereichen einer gemeinsamen elektrisch leitfähigen Schicht ausgebildet und die dritte Elektrode von Bereichen einer elektrisch leitfähigen Schicht ausgebildet, die auf der der Anzeigenschicht abgewandten Seite der gemeinsamen elektrisch leitfähigen Schicht der zweiten und vierten Elektrode angeordnet ist.

Vorzugsweise ist die vierte Elektrode innerhalb des ersten Bereichs angeordnet. Vorzugsweise bildet die zweite Elektrode eine erste Information und die vierte Elektrode eine zweite Information aus. Die zweite Elektrode ist so beispielsweise in Form eines ersten, auch aus mehreren Teilmotiven zusammengesetzten Motivs ausgeformt, welches die erste Information darstellt. Die vierte Elektrode ist in Form eines zweiten Motivs ausgeformt, welches sich ebenfalls aus verschiedenen Teilmotiven zusammensetzen kann. Die dritte Elektrode ist vorzugsweise im Hintergrundbereich zu dem ersten und zweiten Motiv angeordnet und so beispielsweise vollflächig im ersten Bereich angeordnet oder entsprechend so strukturiert, dass die dritte Elektrode im ersten Bereich zumindest in dem nicht von der zweiten und vierten Elektrode abgedeckten Bereich vorgesehen ist. Wird so die zweite Elektrode mit einem ersten Spannungspotenzial und die vierte und dritte Elektrode mit einem zweiten Spannungspotenzial belegt, so zeigt sich die erste Information. Wird die vierte Elektrode mit dem ersten Spannungspotenzial belegt und die zweite und dritte Elektrode mit dem zweiten Spannungspotenzial belegt, so zeigt sich das zweite Motiv als zweite Information. Bei inverser Anordnung des ersten und zweiten Spannungspotenzials zeigt sich das erste bzw. zweite Motiv in inverser Darstellung als erste bzw. zweite Information.

Vorzugsweise ist außerhalb des ersten Bereichs eine fünfte Elektrode vorgesehen, wobei sich die erste und die fünfte Elektrode bei Betrachtung senkrecht zu einer von der Anzeigenschicht aufgespannten Ebene zumindest bereichsweise überlappen. Durch Anordnung dieser weiteren Elektrode kann die Qualität der Anzeige der ersten und zweiten Information verbessert werden indem innerhalb der Anzeigeeinrichtung eine ausgeglichene Ladungsbilanz herbeigeführt wird.

Gemäß einem bevorzugten Ausführungsbeispiel der Erfindung weist die zweite Elektrode eine Vielzahl von galvanisch miteinander verbundenen ersten Teilelektroden auf, die so ausgeformt und angeordnet sind, dass sie die erste Information ausbilden. Weiter weist die vierte Elektrode eine Vielzahl von galvanisch miteinander verbundenen zweiten Teilelektroden auf, die so ausgeformt und angeordnet sind, dass sie die zweite Information ausbilden. Die erste und zweite Teilelektrode weisen jeweils eine Breite von weniger als 300 µm, bevorzugt von weniger als 150 µm auf. Die erste und zweite Teilelektrode sind weiter ineinander gerastert angeordnet, insbesondere abwechselnd angeordnet. Hierdurch wird es möglich, in einem Bereich in Abhängigkeit von dem an die zweite, dritte und vierte Elektrode angelegten Spannungspotenzial die erste und die zweite Information darzustellen.

Vorzugsweise besitzen die ersten und zweiten Teilelektroden jeweils eine linienförmige Formgebung und sind gemäß einem eindimensionalen Raster mit einer Rasterweite von 750 µm bis 100 µm , weiter bevorzugt von 300 µm bis 50 µm, angeordnet.

Diese Ausführungsvariante kann weiter auch mit der oben beschriebenen Ausführungsvariante kombiniert werden, bei der durch geschickte Ausbildung der Elektroden ein Graustufenbild im ersten Bereich generiert wird. So ist es beispielsweise möglich, die ersten und zweiten Informationen in Form eines Graustufenbildes auszubilden und/oder vor einem Hintergrund zu generieren, dessen Farbwert dem Farbwert einer Graustufe entspricht. Hierzu hat sich insbesondere folgende Elektrodenanordnung bewährt: Innerhalb des ersten Bereichs ist eine fünfte Elektrode vorgesehen, die auf der der ersten Elektrode abgewandten Seite der Anzeigenschicht angeordnet ist. Die dritte Elektrode weist eine Vielzahl von galvanisch miteinander verbundenen dritten Teilelektroden auf. Die fünfte Elektrode weist eine Vielzahl von galvanisch miteinander verbundenen vierten Teilelektroden auf. Die dritte und vierte Teilelektrode weisen jeweils eine Breite von weniger als 300 µm, weiter bevorzugt von weniger als 150 µm auf. Die dritte und die vierte Teilelektrode sind ineinander gerastert angeordnet, insbesondere abwechselnd angeordnet.

Auch hier ist es möglich, dass die ersten, zweiten, dritten oder vierten Teilelektroden eine linienförmige Formgebung besitzen und insbesondere aus einer geometrisch transformierten Linie, beispielsweise einer Schlangenlinie, bestehen. Die ersten, zweiten, dritten und/oder vierten Teilelektroden sind weiter bevorzugt parallel zueinander angeordnet.

Gemäß einem bevorzugten Ausführungsbeispiel weist die Anzeigeeinrichtung einen Gleichrichter auf, wobei einer der beiden Ausgänge des Gleichrichters mit der dritten Elektrode und der andere der Ausgänge mit der fünften Elektrode verbunden ist. Die Anzeigeeinrichtung weist weiter eine Energiequelle auf, wobei der eine der Ausgänge der Energiequelle mit einem der Eingänge des Gleichrichters und mit der zweiten Elektrode verbunden ist und der andere der Ausgänge der Energiequelle mit dem anderen der Eingänge des Gleichrichters und mit der vierten Elektrode verbunden ist, wobei die Energiequelle insbesondere ein Piezoelement ist.

Weiter ist es auch möglich, die vierte Elektrode außerhalb des ersten Bereichs anzuordnen und so lediglich eine Information vor gleich bleibendem Hintergrund erscheinen bzw. verschwinden zu lassen.

Gemäß einem bevorzugten Ausführungsbeispiel weist die Anzeigeeinrichtung weiter eine oder mehrere optische Sicherheitselemente auf. Bei den optischen Sicherheitselementen handelt es sich hierbei vorzugsweise um beugungsoptische Sicherheitselemente, Sicherheitselemente enthaltend ein Dünnfilmschichtsystem, Sicherheitselemente enthaltend optisch variable Pigmente, Sicherheitselemente enthaltend Mikrolinsen oder Sicherheitselemente enthaltend Flüssigkristalle. Durch diese zusätzlichen Sicherheitselemente kann die Fälschungssicherheit der Anzeigeeinrichtung weiter erhöht werden.

Vorzugsweise ist die Anzeigeeinrichtung als Laminierfolie oder Transferfolie ausgebildet. Vorzugsweise weist eine Laminierfolie hierbei eine Trägerfolie, eine Dekorlage und optional eine Kleberschicht auf. Die erste, zweite und dritte Elektrode sowie die Anzeigenschicht sind hierbei vorzugsweise Teile der Dekorlage, ebenso wie die oben erwähnten optischen Sicherheitselemente. In der Ausbildung als Transferfolie weist die Anzeigeeinrichtung vorzugsweise eine Trägerfolie und eine von dieser ablösbare Übertragungslage auf, die die vorhergehend erwähnte Dekorschicht sowie eine optionale Kleberschicht aufweist.

Besonders vorteilhaft ist die Verwendung der Anzeigeeinrichtung als Sicherheitselement, insbesondere zur Sicherung von Wertdokumenten oder zur Warensicherung. Wertdokumente werden hierbei insbesondere von Banknoten, ID-Dokumenten, Kreditkarten, Zertifikaten und Ähnlichem gebildet.

Im Folgenden wird die Erfindung anhand mehrerer Ausführungsbeispiele unter Zuhilfenahme der beiliegenden Zeichnungen beispielhaft erläutert:
- Fig. 1a: zeigt eine schematische Draufsicht auf ein Wertdokument mit einer Anzeigeeinrichtung,
- Fig. 1b: zeigt eine schematische Schnittdarstellung der Anzeigeeinrichtung nach Fig. 1a,
- Fig. 1c: zeigt eine schematische Schnittdarstellung eines Ausschnitts aus der Anzeigeeinrichtung nach Fig. 1b,
- Fig. 2: zeigt eine schematische Schnittdarstellung eines Ausschnitts einer Anzeigeeinrichtung,
- Fig. 3: zeigt eine schematische Schnittdarstellung eines Ausschnitts einer Anzeigeeinrichtung,
- Fig. 4: zeigt eine schematische Schnittdarstellung eines Ausschnitts einer Anzeigeeinrichtung,
- Fig. 5a: zeigt eine schematische Draufsicht auf Elektroden einer Anzeigeeinrichtung,
- Fig. 5b und Fig. 5c: zeigen schematische Darstellungen einer Draufsicht auf einen Bereich der Anzeigeeinrichtung nach Fig. 5a,
- Fig. 6a und Fig. 6b: zeigen jeweils eine schematische Draufsicht auf eine Elektrode einer Anzeigeeinrichtung,
- Fig. 6c und Fig. 6d: zeigen jeweils eine schematische Draufsicht auf einen Bereich der Anzeigeeinrichtung nach Fig. 6a und Fig. 6b,
- Fig. 7a: zeigt eine schematische Draufsicht auf Elektroden einer Anzeigeeinrichtung,
- Fig. 7b und Fig. 7c: zeigen eine schematische Darstellung einer Draufsicht auf die Anzeigeeinrichtung nach Fig. 7a,
- Fig. 8a: zeigt eine schematisch Draufsicht auf einen Ausschnitt der Elektroden einer Anzeigeeinrichtung,
- Fig. 8b: zeigt eine schematische Draufsicht auf einen Bereich der Anzeigeeinrichtung nach Fig. 8a,
- Fig. 9a und Fig. 9b: zeigen jeweils eine schematische Draufsicht auf einen Ausschnitt einer Elektrode einer Anzeigeeinrichtung,
- Fig. 9c und Fig. 9d: zeigen jeweils eine schematische Draufsicht auf einen Bereich der Anzeigeeinrichtung nach Fig. 8a und Fig. 9b,
- Fig. 10a: zeigt eine schematische Draufsicht auf einen Ausschnitt einer Elektrode einer Anzeigeeinrichtung,
- Fig. 10b: zeigt eine schematische Draufsicht auf einen Ausschnitt mit Elektroden einer Anzeigeeinrichtung,
- Fig. 11a: zeigt eine schematische Schnittdarstellung eines Ausschnitts einer Anzeigeeinrichtung,
- Fig. 11b: zeigt ein Schaltbild für eine mögliche Kontaktierung der Elektroden der Anzeigeeinrichtung nach Fig. 11a,
- Fig. 12a bis Fig. 12d: zeigen jeweils eine schematische Draufsicht auf eine oder mehrere Elektroden einer Anzeigeeinrichtung,
- Fig. 12e, Fig. 12f, Fig. 12h und Fig. 12i: zeigen jeweils eine Draufsicht auf eine oder zwei Elektroden einer Anzeigeeinrichtung,

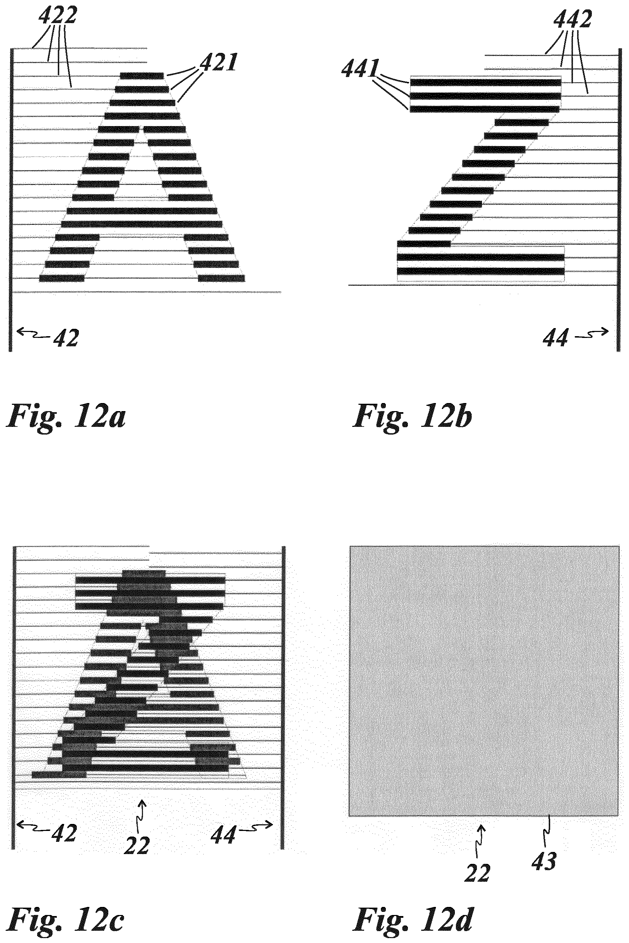

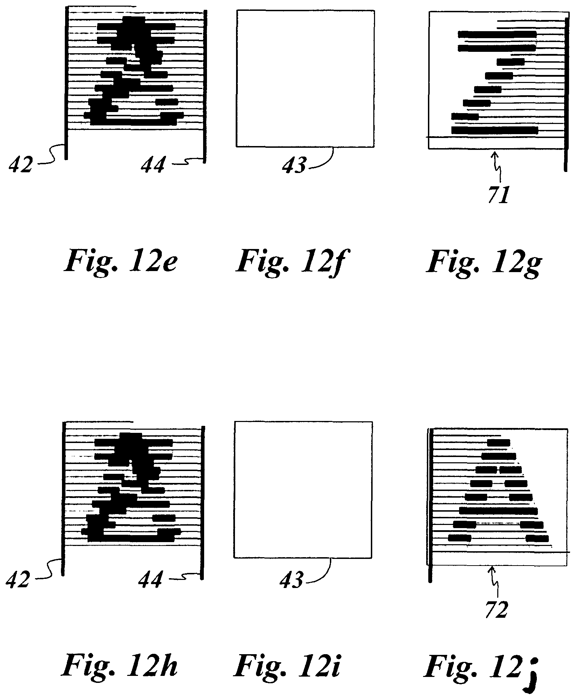

- Fig. 12 g und Fig. 12 j: zeigen jeweils eine vergrößerte Darstellung einer Draufsicht auf einen Bereich der Anzeigeeinrichtung nach Fig. 12e, Fig. 12f, Fig. 12h und Fig. 12i bei Anlegung unterschiedlicher Spannungspotenziale,

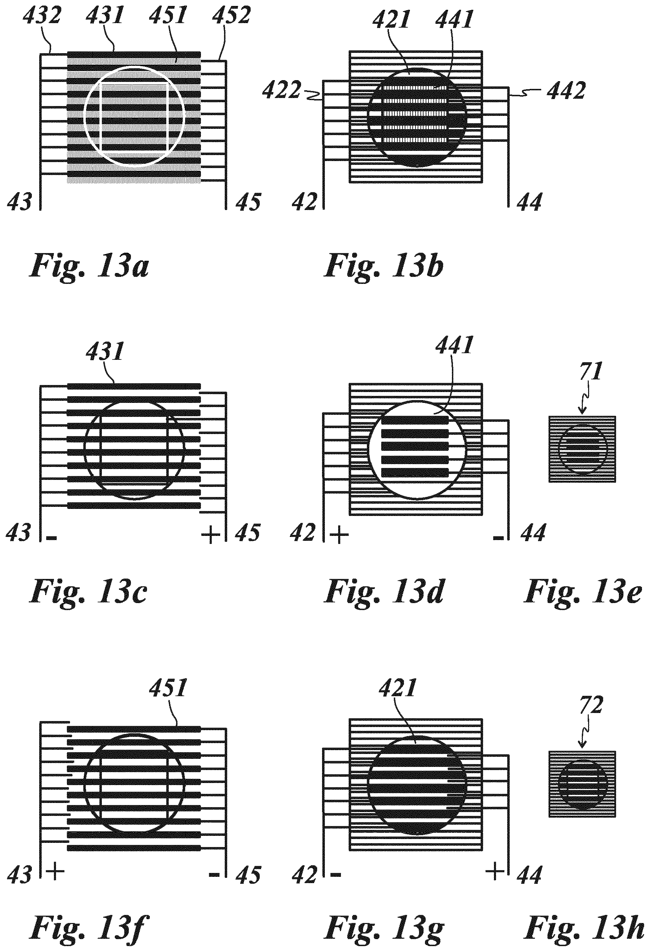

- Fig. 13a und Fig. 13b: zeigen jeweils eine schematische Draufsicht auf zwei Elektroden einer Anzeigeeinrichtung,
- Fig. 13c bis Fig. 13e: zeigen jeweils eine schematische Draufsicht einer oder mehrerer Elektrodenebenen der Anzeigeeinrichtung nach Fig. 13a und Fig. 13b bei Anlegung einer ersten Spannung,
- Fig. 13f bis Fig. 13h: zeigen jeweils eine Draufsicht auf eine oder mehrere Elektrodenebenen der Anzeigeeinrichtung nach Fig. 13a bis 13b bei Anlegung einer zweiten Spannung und

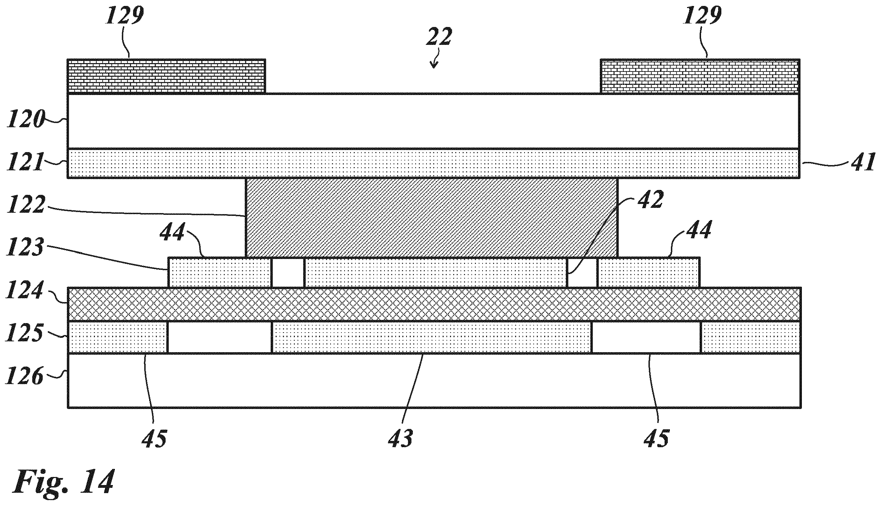

- Fig. 14: zeigt eine schematische Schnittdarstellung eines Ausschnitts einer Anzeigeeinrichtung.

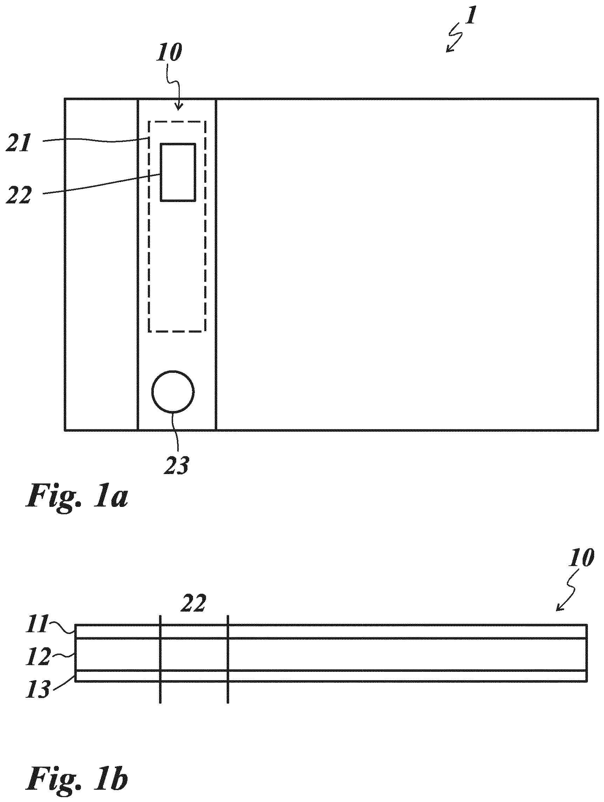

Fig. 1a zeigt ein Wertdokument 1. Bei dem Wertdokument 1 handelt es sich beispielsweise um eine Banknote, ein ID-Dokument, beispielsweise einen Pass oder eine Passkarte, einer Kreditkarte, einem Ticket, einem Gutschein, einem Lotterieschein, einem Preisschild oder einem Zertifikat. In dem Ausführungsbeispiel nach Fig. 1a wird das Wertdokument 1 beispielhaft von einer Banknote gebildet. Die Banknote weist hierbei ein Trägersubstrat auf, welches beispielsweise aus Papier, einer Kunststofffolie oder einem Mehrschichtsubstrat bestehend aus einem oder mehreren Kunststoff- oder Papierlagen gebildet ist. Auf dem Trägersubstrat ist eine Anzeigeeinrichtung 10 appliziert. Die Anzeigeeinrichtung 10 kann hierbei - wie dies in Fig. 1a gezeigt ist - in Form eines Streifens auf das Trägersubstrat appliziert sein. Es ist jedoch auch möglich, dass die Anzeigeeinrichtung 10 in Form eines Patches auf das Trägersubstrat des Wertdokuments 1 appliziert ist oder in dem Schichtaufbau der Schichten des Trägersubstrats des Wertdokuments 1 integriert ist, so beispielsweise als Faden im Fenster eines Wertdokuments.

Neben der Anzeigeeinrichtung 10 kann das Wertdokument 1 eine oder mehrere optische Sicherheitselemente, beispielsweise Wasserzeichen, Sicherheitsaufdrucke insbesondere enthaltend optisch variable Pigmente, magnetische, IR-absorbierende oder UV-fluoreszierende Tinten sowie auf dem Trägersubstrat applizierte Sicherheitselemente in Form von auf das Trägersubstrat applizierten Folien aufweisen.

Die Anzeigeeinrichtung 10 weist hierbei einen Bereich 22 auf, in welchem durch die im Folgenden beschriebene Schichtanordnung eine optische Information gezeigt wird. Weiter weist die Anzeigeeinrichtung 10 vorzugsweise noch eine Energiequelle auf, welche beispielsweise in dem in Fig. 1a angedeuteten Bereich 21 innerhalb der Schicht der Anzeigeeinrichtung 10 vorgesehen ist.

Bei der Energiequelle handelt es sich vorzugsweise um ein Piezoelement, welches bei mechanischer Deformation wie Biegen oder Knicken der Anzeigeeinrichtung 10 einen Spannungsimpuls generiert. Es ist jedoch auch möglich, dass die Energiequelle von einer Antenne, einer Batterie oder einer Solarzelle gebildet wird, wie dies vorhergehend auch bereits erläutert worden ist.

Die Anzeigeeinrichtung weist vorzugsweise noch eine oder mehrere optische Sicherheitselemente auf, von denen in Fig. 1a ein optisches Sicherheitselement 23 angedeutet ist. Bei dem optischen Sicherheitselement 23 handelt es sich hierbei vorzugsweise um ein beugungsoptisches Sicherheitselement, welches insbesondere durch eine Volumenhologrammschicht oder ein in einer Replizierlackschicht abgeformtes beugungsoptisches Oberflächenrelief gebildet ist. Weiter ist es auch möglich, dass eine oder mehrere solcher beugungsoptischen Strukturen in dem optischen Sicherheitselement 23 miteinander kombiniert angeordnet sind. Weiter kann es sich bei dem Sicherheitselement 23 auch um ein Interferenzschichtsystem handeln, welches einen blickwinkelabhängigen Farbverschiebungseffekt generiert. Ein solches Dünnfilmschichtsystem weist vorzugsweise eine oder mehrere Distanzschichten auf, deren optische Dicke der halben bzw. viertel Wellenlänge einer Farbe im sichtbaren Wellenlängenspektrum entspricht. Das optische Sicherheitselement 23 kann weiter auch eine oder mehrere vorzugsweise vernetzte Flüssigkristallschichten aufweisen, welche einen blickwinkelabhängigen Farbverschiebungseffekt oder ein mittels eines Polarisators erkennbares Sicherheitsmerkmal generieren. Weiter kann das Sicherheitselement 23 auch eine Mikrolinsenschicht oder refraktive Reliefstrukturen aufweisen, welche einen optisch variablen Effekt generieren. Das Sicherheitselement 23 kann hierbei sowohl in Reflexion als auch in Transmission wirken, wobei hierbei das Trägersubstrat des Wertdokuments 1 über eine entsprechende Ausnehmung im Bereich des Sicherheitselements 23 verfügt oder das Trägersubstrat in diesem Bereich dann transparent ausgebildet ist. Vorzugsweise weist das Sicherheitselement 23 hierbei auch noch eine oder mehrere metallische Schichten auf, welche vorzugsweise als Reflexionsschicht dienen und ggf. sehr fein strukturiert sind.

Es kann auch vorgesehen sein, dass das Sicherheitselement 23 zumindest bereichsweise mit dem Bereich 22 der Anzeigeeinrichtung 10 überlappt, um so einen zusätzlichen optischen Effekt zu generieren.

Die Anzeigeeinrichtung 10 kann weiter auch mehrere Bereiche 22 aufweisen, in welchen wie folgt beschrieben eine optische Information durch eine Anordnung mit drei oder mehr Elektroden generiert wird.

Die Anzeigeeinrichtung 10 besteht vorzugsweise aus einem mehrschichtigen Folienkörper, welcher als Laminierfolie oder als Transferfolie ausgebildet ist. Es ist jedoch auch möglich, dass die Anzeigeeinrichtung - wie bereits oben ausgeführt - integraler Bestandteil des Trägersubstrats des Wertdokuments 1 ist.

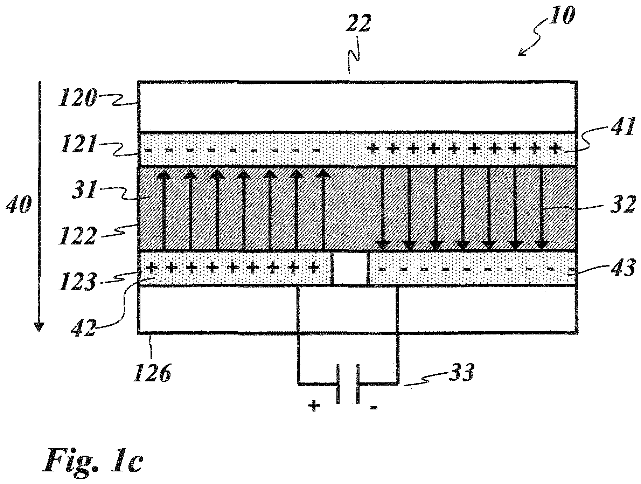

Die Anzeigeeinrichtung 10 weist somit beispielsweise eine Trägerfolie 11, eine Dekorlage 12 und eine optionale Kleberschicht 13 auf. Die Trägerschicht 11 besteht vorzugsweise aus einer Kunststofffolie, beispielsweise einer PET oder BOPP-Folie, einer Schichtdicke zwischen 16 und 250 µm. Im Fall einer Transferfolie ist die Haftkraft zwischen der Trägerfolie 11 und der Dekorlage 12 so eingestellt, dass ein Ablösen der Trägerfolie 11 von der Dekorlage 12 möglich ist. Hierzu ist beispielsweise eine Ablöseschicht zwischen der Trägerfolie 11 und der Dekorlage 12 vorgesehen. Falls die Anzeigeeinrichtung 10 als Laminierfolie ausgebildet ist, ist die Haftung zwischen der Trägerfolie 11 und der Dekorlage 12 so gewählt, dass ein solches Ablösen möglichst nicht möglich ist. Es ist so beispielsweise eine Haftvermittlungsschicht zwischen der Trägerfolie 11 und der Dekorlage 12 vorgesehen. Der Schichtaufbau der Anzeigeeinrichtung 10 in dem Bereich 22 wird im Folgenden beispielhaft anhand von Fig. 1c bis Fig. 4, Fig. 11a und Fig. 14 beschrieben.

Fig. 1c verdeutlicht eine erste Ausführungsvariante des Aufbaus der Anzeigeeinrichtung 10 im Bereich 22.

Die Anzeigeeinrichtung 10 weist im Bereich 22 eine dielektrische Schicht 120, eine elektrisch leitfähige Schicht 121, eine Anzeigenschicht 122, eine elektrisch leitfähige Schicht 123 und dielektrische Schicht 126 auf. Neben diesen Schichten kann die Anzeigeeinrichtung auch noch ein oder mehrere weitere Schichten in dem Bereich 22 aufweisen, beispielsweise weitere elektrisch leitfähige Schichten, weitere dielektrische Schichten, Haftvermittlungsschichten, Farbschichten usw.

Die elektrisch leitfähigen Schichten 121 und 123 bestehen aus einem elektrisch leitfähigen Material, beispielsweise aus ITO oder PEDOT oder aus einem metallischen Material, beispielsweise Aluminium, Silber, Kupfer, Gold oder einer Legierung dieser Metalle. Die Schichtdicke der elektrisch leitfähigen Schichten 121 und 123 beträgt zwischen 1 nm und 500 nm, weiter bevorzugt zwischen 5 nm und 250 nm.

Vorzugsweise ist hierbei die elektrisch leitfähige Schicht 121 transparent oder semitransparent ausgebildet und ist insbesondere aus einem transparenten elektrisch leitfähigen Material ausgebildet. Vorzugsweise ist weiter die elektrisch leitfähige Schicht 123 aus einem (opaken) metallischen Material ausgebildet. Damit ist es möglich, den sich im Bereich 22 in der Anzeigenschicht 122 ergebenden optischen Effekt von der Oberseite, d. h. von Seiten der Trägerfolie 11 her zu beobachten. Es ist jedoch auch möglich, dass die elektrisch leitfähigen Schichten 123 und 121 in umgekehrter Reihenfolge angeordnet sind und die Schicht 123 transparent und die Schicht 121 opak ausgebildet ist. Weiter ist es auch möglich, dass beide elektrisch leitfähigen Schichten 121 und 123 transparent ausgebildet sind und so der sich in der Anzeigenschicht 122 ergebende optische Effekt auch im Durchlicht oder vor dem Hintergrund einer weiteren optischen Information betrachtet werden kann, welche in der Anzeigeeinrichtung 10 angeordnet ist oder in dem Trägersubstrat des Wertdokuments 1 angeordnet ist.

Die dielektrischen Schichten 120 und 126 werden von einer Lackschicht aus einem dielektrischen Lack oder von einer dielektrischen Folie gebildet. Vorzugsweise wird die dielektrische Schicht 120 von der Trägerfolie 11 gebildet.

In der elektrisch leitfähigen Schicht 121 ist eine Elektrode 41 ausgebildet oder die elektrisch leitfähige Schicht 121 ist in Form einer Elektrode 41 vorgesehen. In der elektrisch leitfähigen Schicht 123 sind zwei Elektroden 42 und 43 ausgeformt. Wie in Fig. 1c dargestellt, überdeckt die Elektrode 41 die Elektroden 42 und 43 jeweils zumindest bereichsweise, vorzugsweise vollständig. Die Überdeckung bezieht sich hierbei auf eine Richtung 40, welche von der Flächennormalen von der der Anzeigeschicht 122 oder der elektrisch leitfähigen Schicht 121 aufgespannten Ebene gebildet ist. Die Schichten 121 und 122 besitzen hierbei vorzugsweise eine Breiten- und Längenausdehnung, die erheblich größer als deren Dicke ist, so dass die entsprechende Ebene eindeutig durch diese Schicht definiert wird. Falls dies nicht der Fall ist, ist die Ebene durch eine der Oberflächen dieser Schichten definiert.

Die Elektrode 41 ist als potentialgetrennte Elektrode ausgebildet. Die Elektrode 41 ist somit galvanisch mit keinem elektrischen Potential und insbesondere keiner Stromquelle oder Spannungsquelle verbunden und auch nicht mit Verbindungselementen verbunden, welche eine galvanische Verbindung der Elektrode 41 mit einer Strom- oder Spannungsquelle oder einer elektronischen Schaltung ermöglichen könnten. Vorzugsweise ist die potentialgetrennte Elektrode 41 vollständig von dielektrischem Material umschlossen, so dass ein Ladungszufluss bzw. -abfluss von der Elektrode 41 nicht möglich oder nur schwer möglich ist. Vorzugsweise sind so auch die Flanken der Elektrode 41, welche in Fig. 1b nicht gezeigt sind, ebenfalls mit einem dielektrischen Material bedeckt. Weiter ist es auch möglich, dass die dielektrische Schicht 120 außerhalb der Elektrode 41 mit der Oberfläche der Anzeigenschicht 122 oder einer zwischen der Anzeigenschicht 122 und der Elektrode 41 angeordneten weiteren dielektrischen Schicht verbunden ist, so dass die Elektrode 41 von der dielektrischen Schicht 120 und der Anzeigenschicht 122 bzw. der zwischen der Anzeigenschicht 122 und der elektrisch leitfähigen Schicht 121 angeordneten dielektrischen Schicht verkapselt ist. Je nach Innenwiderstand des verwendeten Displaymaterials kann über die Anzeigenschicht 122 ein geringer Leckstrom zu den Elektroden 42 und 43 fließen. Dies kann von Vorteil sein, da darüber das bistabile Verhalten der Anzeigeeinrichtung in gewissen Grenzen beeinflusst werden kann.

Werden nun die Elektroden 42 und 43, wie in Fig. 1c gezeigt, mit einer elektrischen Spannungsquelle 33 verbunden, so ergibt sich der in Fig. 1c angedeutete idealisierte Feldlinienverlauf innerhalb der Anzeigenschicht 122. In einem ersten Bereich, in welchem sich die Elektroden 41 und 42 überdecken, sind die elektrischen Feldlinien in eine erste Richtung 31 orientiert und in einem zweiten Bereich, in welchem sich die Elektrode 41 und die Elektrode 43 überlappen, sind die Feldlinien in eine entgegengesetzte Richtung 32 orientiert.

Die Anzeigenschicht 122 weist nun vorzugsweise ein Display-Material auf, welches bei unterschiedlicher Orientierung der elektrischen Feldlinien unterschiedliche optischen Eigenschaften zeigt, d.h. im ersten Bereich mit der Orientierung der Feldlinien in Richtung 31 erste optische Eigenschaften zeigt und in dem zweiten Bereich mit der Orientierung der Feldlinien in Richtung 32 zweite optische Eigenschaften zeigt. Bei den unterschiedlichen optischen Eigenschaften handelt es sich hierbei vorzugsweise um eine unterschiedliche Farbe in dem ersten Bereich und dem zweiten Bereich wie beispielsweise einen Schwarz/Weiß-Kontrast, einen Rot/Weiß-Kontrast oder einen Grün/Gelb-Kontrast.

Vorzugsweise weist die Anzeigenschicht 122 als Display-Material mit Flüssigkeit gefüllte Sphären oder Kammern auf, in welcher eine Vielzahl von elektrisch geladenen Teilchen dispergiert ist. Hierbei können sich die optischen Eigenschaften der Flüssigkeit und der Teilchen voneinander unterscheiden, so dass abhängig von der Richtung der elektrischen Feldlinien entweder die Teilchen oder die Flüssigkeit in dem Bereich 22 sichtbar sind. Weiter ist es auch möglich, dass die Sphären oder Kammern jeweils eine Vielzahl von ersten Teilchen und eine Vielzahl von zweiten Teilchen aufweisen, die sich in Bezug auf ihre elektrische Ladung und in Bezug auf ihre optischen Eigenschaften unterscheiden. So können im einfachsten Fall die ersten Teilchen positiv geladen sein und eine erste Farbe besitzen, und die zweiten Teilchen negativ geladen sein und eine zweite, sich von der ersten Farbe unterscheidende Farbe besitzen. Je nach Verlauf der Feldlinien zeigt sich dann im Bereich 22 die erste Farbe bzw. die zweite Farbe.

Die Sphären bzw. Kammern besitzen hierbei vorzugsweise eine Breite/Länge von 10 µm bis 500 µm und eine Dicke von 10 µm bis 100 µm. Die Teilchen besitzen vorzugsweise einen Durchmesser zwischen 0,1 µm und 10 µm, weiter bevorzugt zwischen 0,1 µm und 5 µm.

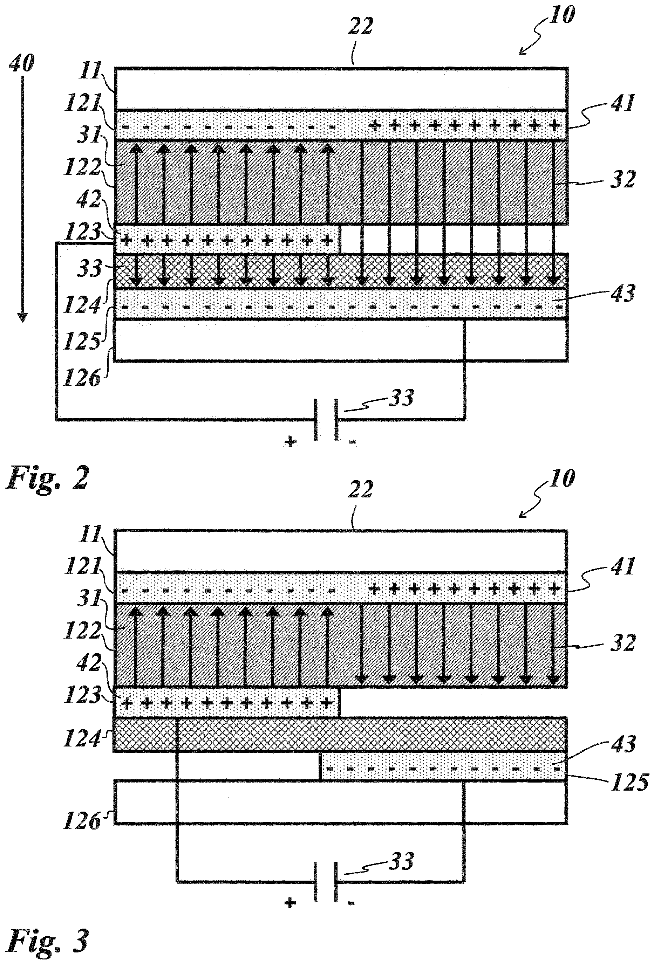

Fig. 2 zeigt eine weitere Ausführungsvariante des Aufbaus der Anzeigeeinrichtung 10 im Bereich 22.

Die Anzeigeeinrichtung 10 ist im Bereich 22 wie in Bezug auf die Figuren Fig. 1a bis 1c beschrieben aufgebaut, mit folgendem Unterschied:
Lediglich eine der beiden Elektroden 42 und 43 ist in der elektrisch leitfähigen Schicht 123 ausgeformt. Weiter ist eine zusätzliche dielektrische Schicht 124 sowie eine weitere elektrisch leitfähige Schicht 125 zwischen der elektrisch leitfähigen Schicht 123 und der dielektrischen Schicht 126 vorgesehen. Die Elektrode 43 ist in der elektrisch leitfähigen Schicht 125 ausgebildet.

Damit sind die Elektroden 42 und 43 in unterschiedlichen Schichtebenen der Anzeigeeinrichtung 10 ausgebildet und besitzen einen unterschiedlichen Abstand von der Elektrode 41. Die Form, lokale Schichtdicke und die Materialeigenschaften der dielektrischen Schicht 124 sind auf ein optimales Schaltverhalten des Displays angepasst. Vorzugsweise sind die elektrisch leitfähigen Schichten 121, 123 und 125 und damit die Elektroden 41, 42 und 43 parallel zueinander angeordnet.

Wie in Fig. 2 gezeigt, ist die Elektrode 43 insbesondere auch in Bereichen der Elektrode 42 (in Bezug auf die Richtung 40) ausgebildet, so dass sich die Elektroden 42 und 43 zumindest bereichsweise, vorzugsweise vollflächig überdecken. Hierdurch wird jedoch, wie in Fig. 2 gezeigt, ein zusätzliches elektrisches Feld 33 zwischen den Elektroden 42 und 43 ausgebildet. Die durch diese Überdeckung der Elektroden 42 und 43 gebildete Kapazität c23 ist parallel zu der von der Überdeckung der Elektroden 41 und 42 gebildeten Kapazität c12 und der von der Überdeckung der Elektroden 41 und 43 gebildeten Kapazität c13 verschaltet, so dass durch diese Überdeckung die Stärke des zwischen der Elektrode 41 und 42 und 41 und 43 ausgebildeten elektrischen Feldes abgeschwächt wird. Die vorgenannten Kapazitäten können hierbei durch die Wahl der Beabstandung der Elektroden 41 und 42 sowie 41 und 43 und über die Wahl der Dielektrizitätskonstante der dielektrischen Schicht 124 sowie der Überdeckungsfläche der Elektroden 42 und 43 entsprechend beeinflusst werden, so dass diese Kapazitätserhöhung zu keiner negativen Beeinflussung des Anzeigeergebnisses führt. Besonders hat sich hierbei bewährt, die Abstände so zu wählen, dass c23 < 1/(1/c12 + 1/c13) ist.

Bei dem Ausführungsbeispiel nach Fig. 2 wird der erste Überlappungsbereich von dem Bereich gebildet, in dem sich die Elektroden 41 und 42 in Bezug auf die Richtung 40 überlappen. Der zweite Überlappungsbereich wird von dem Bereich gebildet, in dem sich die Elektroden 41 und 43 überlappen und die Elektroden 41 und 42 nicht überlappen, wie dies sich auch aus der Darstellung nach Fig. 2 ergibt. In dem ersten Überlappungsbereich und in dem zweiten Überlappungsbereich wird bei der Verwendung des vorgehend beschriebenen Display-Mediums bei Anlegen einer elektrischen Spannung ein entsprechend unterschiedlicher optischer Effekt generiert, wie oben dargelegt.

Im Übrigen wird auf die vorgehenden Ausführungen zu den Figuren Fig. 1a bis Fig. 1c verwiesen.

Fig. 3 zeigt eine weitere Ausführungsvariante des Aufbaus der Anzeigeeinrichtung 10 im Bereich 22. Der Aufbau gemäß Fig. 3 entspricht hierbei dem Aufbau nach Fig. 2 mit dem Unterschied, dass nicht nur die Elektrode 42, sondern auch die Elektrode 43 in Bezug auf die darzustellende Bildinformation strukturiert ist. Vorzugsweise überlappen hierbei die Elektroden 42 und 43 lediglich zwischen 1 % und 10 %. Weiter ist es auch möglich, dass die Elektroden 42 und 43 sich nicht überlappen, sondern lediglich in zwei unterschiedlichen Ebenen angeordnet sind. Im Übrigen wird auf die Ausführungen nach Fig. 1a bis Fig. 2 verwiesen.

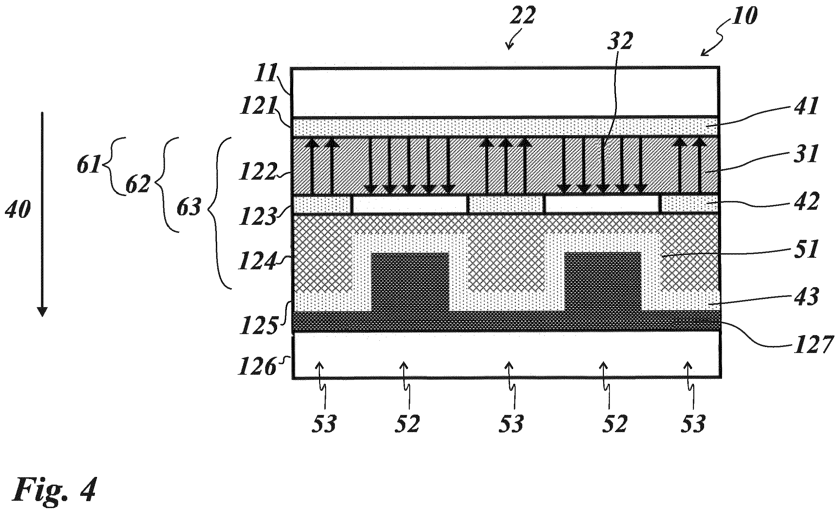

Fig. 4 zeigt ein weiteres Ausführungsbeispiel für den Aufbau der Anzeigeeinrichtung 10 im Bereich 22.

Der Aufbau gemäß dem Ausführungsbeispiel nach Fig. 4 entspricht hierbei dem Aufbau gemäß dem Ausführungsbeispiel nach Fig. 2 mit dem Unterschied, dass die elektrisch leitfähige Schicht 125 und damit die Elektrode 43 im Bereich 22 nicht in einer planen Ebene verläuft, sondern, in Bezug auf die Richtung 40, Erhebungen und Vertiefungen aufweist.

In die elektrisch leitfähige Schicht 125 ist hierzu vorzugsweise ein Relief abgeformt, wie dies in Fig. 4 gezeigt ist. Hierzu wird auf die dielektrische Schicht 126 eine Replizierlackschicht 127 aufgebracht, in welche durch thermisches Replizieren oder UV-Replikation eine Reliefstruktur 51 abgeformt wird. Anschließend wird die elektrisch leitfähige Schicht 125 beispielsweise durch Aufdampfen oder Aufsputtern aufgebracht. Weiter ist es auch möglich, dass auf die Replizierlackschicht 127 die elektrisch leitfähige Schicht 125 aufgebracht wird und anschließend mittels thermischem Replizieren die Reliefstruktur 51 in den so gebildeten Mehrschichtkörper abgeformt wird, so dass sich der in Fig. 4 gezeigte Verlauf der elektrisch leitfähigen Schicht 125 ergibt.

Die Reliefstruktur 51 und damit die elektrisch leitfähige Schicht 125 weist hier Erhebungen 52 und Vertiefungen 53 auf, wie dies in Fig. 4 gezeigt ist. Vorzugsweise sind hierbei die Vertiefungen 53 im Bereich der Elektrode 42 vorgesehen, so dass im Bereich der Elektrode 42 der Abstand zwischen der Elektrode 41 und der Elektrode 43 größer ist als in den Bereichen des Bereichs 22, in denen sich lediglich die Elektroden 41 und 43 überlappen. Die Reliefstruktur 51 ist vorzugsweise passergenau zu der Ausformung der Elektrode 42 ausgebildet. Vorzugsweise weist die Reliefstruktur 51 hierbei rechteckförmige Strukturelemente auf, wie dies in Fig. 4 gezeigt ist. Es ist jedoch auch möglich, dass die Reliefstruktur 51 beispielsweise eine sinusförmige oder gewellte Formgebung besitzt, wobei sich in diesem Fall die obigen Angaben bzgl. der Beabstandung auf die mittlere Beabstandung der Elektroden voneinander in dem jeweiligen Bereich beziehen. Die dielektrische Schicht 124 verfüllt die Vertiefungen/Erhebungen, welche durch die Reliefstruktur 51 bewirkt werden, so dass die elektrisch leitfähige Schicht 123 zumindest weitgehend parallel zu der elektrisch leitfähigen Schicht 121 angeordnet ist.

Wie in Fig. 4 gezeigt, weisen die Elektroden 41 und 42 einen Abstand 61 auf und die Elektroden 41 und 43 sind im Bereich der Elektrode 42 mit einem Abstand 63 und in dem Bereich, in dem sich lediglich die Elektroden 41 und 43 überlappen, mit einem Abstand 62 voneinander beabstandet. Vorzugsweise werden die Abstände 61, 62, und 63 hierbei so gewählt, dass der Abstand 61 und der Abstand 62 etwa gleich sind und der Abstand 63 deutlich größer als der Abstand 62 ist.

Durch diese Wahl der Parameter 61, 62 und 63 kann - wie bereits oben beschrieben - die durch die überlappende Anordnung der Elektroden 42 und 43 entstehende kapazitive Last stark abgesenkt werden und die oben beschriebenen Vorteile bzgl. einer komplexen Ausgestaltung der von der Anzeigeeinrichtung im Bereich 22 angezeigten optischen Information erzielt werden.

Im Übrigen wird auf die Ausführungen zu den Figuren Fig. 1a bis Fig. 3 verwiesen. Es ist hierbei auch anzumerken, dass auch im Fall des Ausführungsbeispiels nach Fig. 4 die Elektrode 43 im Bereich der Elektrode 42 - wie in Fig. 3 gezeigt - strukturiert sein kann und in diesem Bereich nicht vollflächig vorgesehen sein muss.

Weiter ist es auch möglich, die Ausführungsformen nach Fig. 2 bis Fig. 4 miteinander zu kombinieren und so beispielsweise in einem Unterbereich des Bereichs 22 einen Aufbau gemäß Fig. 2, in einem weiteren Unterbereich einen Aufbau gemäß Fig. 3 und in einem weiteren Unterbereich einen Aufbau gemäß Fig. 4 zu wählen.

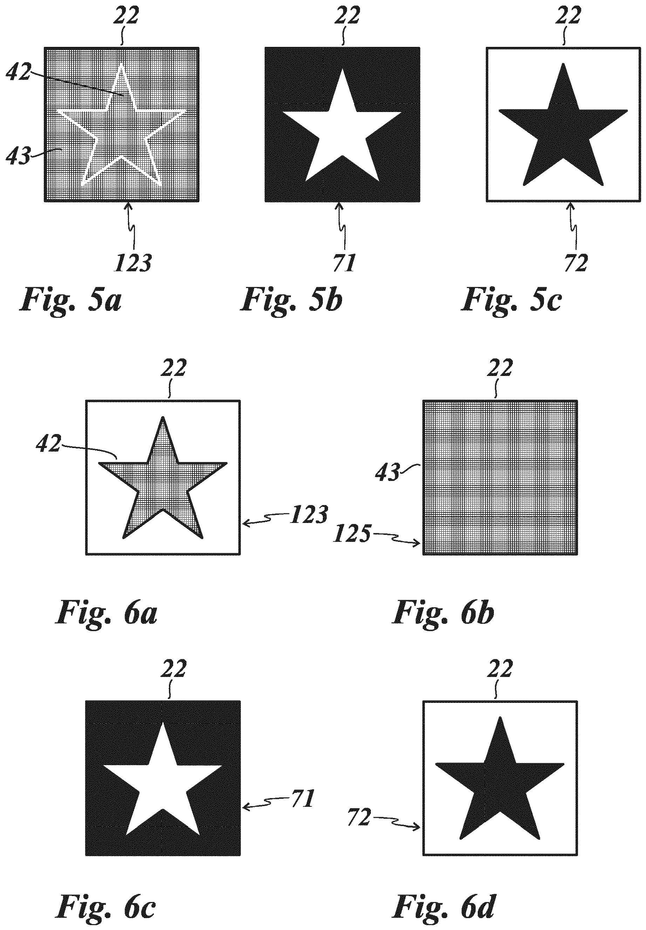

In den folgenden Ausführungsbeispielen nach Fig. 5a bis Fig. 10b werden vorteilhafte Ausformungen der Elektroden 42 und 43 zur Erzielung besonders interessanter optischer Effekte beschrieben. Diese Ausführungsbeispiele sind mit sämtlichen der oben beschriebenen Ausführungsvarianten des Schichtaufbaus, also mit sämtlichen Ausführungsvarianten gemäß der Figuren Fig. 1a bis Fig. 4, kombinierbar.

Fig. 5a zeigt eine Draufsicht auf die elektrisch leitfähige Schicht 123 in dem Bereich 22. In der elektrisch leitfähigen Schicht 123 sind hierbei die Elektroden 42 und 43 getrennt durch einen Isolationsgraben ausgeformt. Wie in Fig. 5a gezeigt, ist die Elektrode 42 hierbei in Form eines Motivs, beispielsweise eines Sterns ausgebildet. Wie bereits oben ausgeführt, kann die Elektrode 42 auch in Form eines beliebigen anderen Motivs, beispielsweise einer Zahl, eines Buchstabens, eines Symbols, einer Kombination dieser Elemente oder auch einer graphischen oder bildlichen Darstellung ausgeformt sein. Die Elektrode 43 ist in Form eines Hintergrunds zu dem Motiv ausgeformt. Die Umrandungslinie des Hintergrunds weist gemäß Fig. 5a eine rechteckförmige Formgebung auf. Es ist jedoch auch möglich, dass die Umrandungslinie des Hintergrunds eine beliebige andere Formgebung, beispielsweise die Formgebung eines Kreises oder auch einer sonstigen beliebigen anderen Form besitzt.

Wird bei einer derartigen Ausformung der Elektroden 42 und 43 eine Spannung zwischen den Elektroden 42 und 43 angelegt, so zeigt sich im Bereich 22 beispielsweise die in Fig. 5b gezeigte Information 71, bei der das Motiv, also der Stern, in weißer Farbe vor einem schwarzen Hintergrund gezeigt wird. Wird die Polarität der an die Elektroden 42 und 43 angelegten Spannung umgekehrt, so zeigt sich die in Fig. 5c gezeigte optische Information 72, bei der das Motiv, also der Stern, in schwarzer Farbe vor einem weißen Hintergrund gezeigt ist. Bei einem Polaritätswechsel ergibt sich damit eine invertierende Darstellung des Motivs, bei der die Farbe des Motivs und des Hintergrunds wechselseitig ausgetauscht sind.

Fig. 6a und Fig. 6b zeigen die Ausformung der Elektroden 42 und 43 in den elektrisch leitfähigen Schichten 123 und 125 für eine Ausführungsvariante, bei der die Elektroden 42 und 43 in unterschiedlichen Ebenen der Anzeigeeinrichtung 10 vorgesehen sind. Die Elektrode 42 ist in Form des Motivs, hier beispielhaft in Form eines Sterns ausgeformt. Die Elektrode 43 ist im Bereich 22 vollflächig ausgeformt. Fig. 6c und Fig. 6d zeigen die sich im Bereich 22 zeigende optische Information 71 und 72 bei Anlegen einer Spannung unterschiedlicher Polarität bei einer Ausformung der Elektroden 42 und 43 gemäß Fig. 6a und Fig. 6b. Auch hier zeigt sich bei einem Polaritätswechsel eine invertierte Darstellung des Motivs, wie bereits oben erläutert.

Weiter ist darauf zu verweisen, dass die Figuren Fig. 5a bis Fig. 6d lediglich eine einfache Ausführungsform bzgl. der Ausgestaltung der Elektroden 42 und 43 zur Verdeutlichung des Funktionsprinzips erläutern. Es ist somit insbesondere auch vorteilhaft, komplexere Motive zu verwenden, welche aus mehreren, räumlich voneinander getrennten Teilmotiven aufgebaut sind. In diesem Fall werden entsprechend dem oben erläuterten Funktionsprinzip die Elektrode 42 und/oder die Elektrode 43 in Form von jeweils gemäß der Formgebung des Teilmotivs ausgeformten Teilelektroden ausgebildet, die durch Leiterbahnen galvanisch miteinander verbunden sind. Die Verbindungsleiterbahnen, die optisch möglichst nicht erkennbar sein sollten, werden vorzugsweise in einer Breite von weniger als 300 µm, weiter bevorzugt von weniger als 100 µm ausgeformt. Weiter ist es auch möglich, dass der oben beschriebene Hintergrundbereich das Motiv nicht vollständig umschließt oder dass auch weiter Zwischenbereiche vorgesehen sind, in denen weder die Elektrode 42 noch die Elektrode 43 die Elektrode 41 überlappt und bei der sich so beispielsweise eine Mischfarbe zwischen den Farben des Motivs/Hintergrunds zeigt.

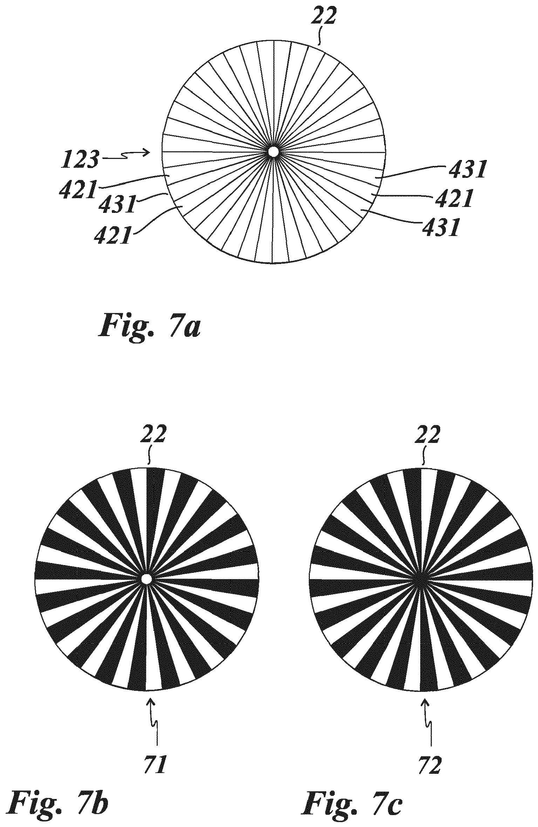

Besonders vorteilhaft ist es, die Elektroden 42 und/oder 43 so auszuformen, dass bei einem Polaritätswechsel durch die an diesen Elektroden anliegende Spannung die Illusion eines Bewegungseffektes generiert wird. Ein einfaches Ausführungsbeispiel für einen derartigen Bewegungseffekt ist nun anhand der Figuren Fig. 7a bis Fig. 7c erläutert.

Fig. 7a zeigt die Ausbildung der Elektroden 42 und 43 in der elektrisch leitfähigen Schicht 123 im Bereich 22. Die Elektrode 42 und die Elektrode 43 bestehen aus einer Vielzahl von Teilelektroden 421 und 431, welche durch Verbindungsleiterbahnen (in Fig. 7a nicht gezeigt) miteinander galvanisch verbunden sind. Vorzugsweise sind die Verbindungsleitungsbahnen hierbei außerhalb des Bereichs 22 angeordnet. Wie in Fig. 7a angedeutet sind die Teilelektroden 431 und 421 hierbei jeweils in Form eines Segments eines Objekts, hier eines rotationssymmetrischen Bilds (Kreis), ausgeformt und abwechselnd nebeneinander angeordnet. Auf eine Teilelektrode 431 folgt so eine Teilelektrode 421, auf die wiederum eine Teilelektrode 431 folgt.

Bei Anlegen einer ersten Spannung zeigt sich so die in Fig. 7b gezeigte Information 71, bei der die mit den Teilelektroden 431 unterlegten Bereiche dunkel und die mit den Teilelektroden 421 belegten Bereiche hell erscheinen. Bei einem Polaritätswechsel der Spannung ergibt sich die in Fig. 7c gezeigte optische Information 72, bei der die mit den Teilelektroden 431 belegten Bereiche weiß und die mit den Teilelektroden 421 belegten Bereiche schwarz erscheinen. Für den Betrachter ergibt sich so bei einem Polaritätswechsel die Illusion der Bewegung der Segmente des Objekts.

Das in den Figuren Fig. 7a bis 7c beschriebene Ausführungsbeispiel kann weiter auch bei einem Aufbau der Anzeigeeinrichtung gemäß Fig. 2 bis Fig. 4 realisiert werden. In diesem Fall ist die Elektrode 42 gemäß Fig. 7a strukturiert und die Elektrode 43 beispielsweise vollflächig im gesamten Bereich des Objekts vorgesehen.

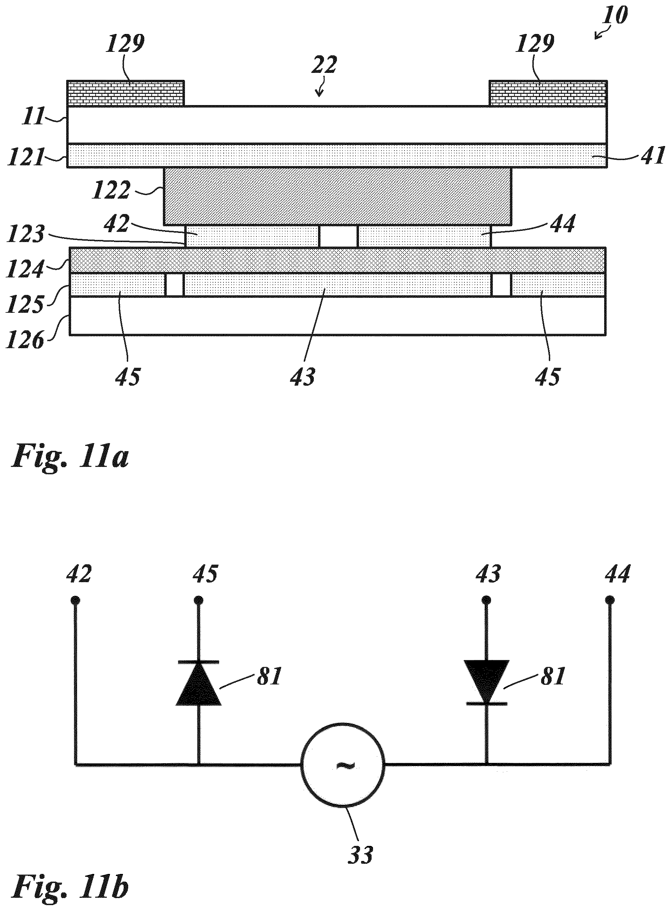

Es ist auch möglich, das oben beschriebene Funktionsprinzip auf vielfältige Weise anzuwenden. So ist es beispielsweise möglich, ein andersartig ausgeformtes Objekt und nicht nur ein rotationssymmetrisch ausgeformtes Objekt in Segmente zu zerteilen oder die Segmente auch nicht rotationssymmetrisch anzuordnen, sondern beliebig anzuordnen. Im Weiteren kann auch der später anhand der Figuren Fig. 11a bis Fig. 12 beschriebene Aufbau dafür herangezogen werden, um bei einem Polaritätswechsel Objekte mit verschiedenen Phasen einer Bewegung anzuzeigen und so die Illusion der Bewegung eines Objekts als optischen Effekt zu generieren.

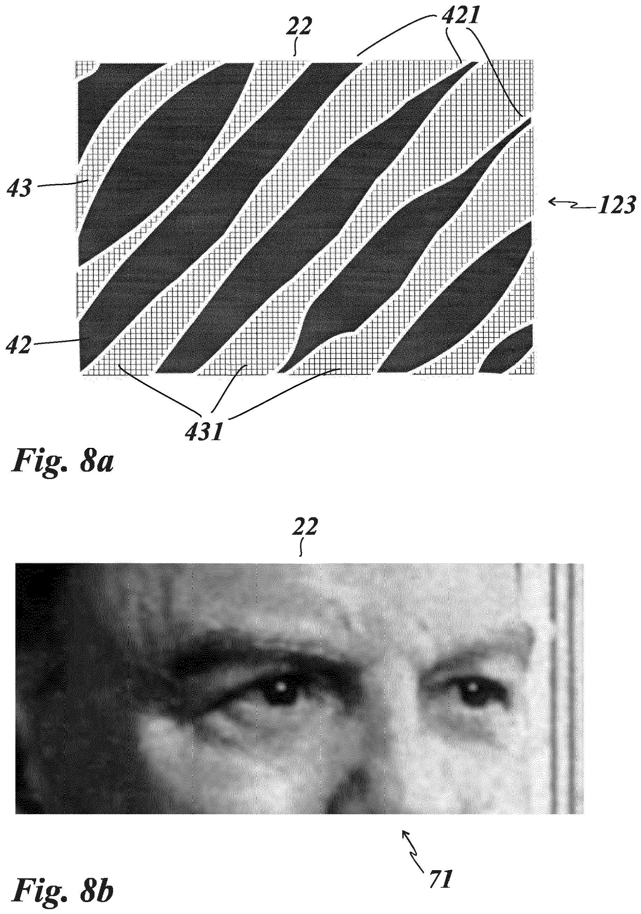

Anhand der Figuren Fig. 8a bis Fig. 10b werden verschiedene Ausführungsbeispiele erläutert, bei denen durch geschickte Ausgestaltung der Elektroden 42 und 43 die Generierung eines Graustufenbildes ermöglicht wird. Hierdurch ist es beispielsweise möglich, bei einem Polaritätswechsel an den Elektroden 42 und 43 die Invertierung eines Graustufenbildes als optischen Effekt zu generieren. Wie bereits oben ausgeführt, ist unter einem Graustufenbild hier nicht nur ein Bild zu verstehen, welches aus der Mischung der Farben schwarz und weiß gebildet ist, sondern auch ein Bild zu verstehen, welches aus der Mischung zweier beliebiger anderer Farben generiert wird. Besonders vorteilhaft ist es hierbei von Schwarz und Weiß abweichende Farben, beispielsweise Rot, Blau oder Grün paarig zu mischen, so dass optisch eindrucksvolle und interessante Farbeffekte generiert werden können und auch die Illusion eines Echtfarbenbildes durch entsprechende Wahl der Primärfarben generiert werden kann.

Entsprechend den ausgebildeten Farbwerten werden so die entsprechenden Primärfarben zur Erzielung dieser Farbwerte im Farbraum ausgewählt und beispielsweise in dem Display-Material die Flüssigkeit in der ersten Primärfarbe und die Teilchen in der zweiten Primärfarbe oder die ersten Teilchen in der ersten Primärfarbe und die zweiten Teilchen in der zweiten Primärfarbe gewählt. Je nach Flächenanteil der ersten Überlappungsbereiche, in denen die Elektroden 41 und 42 überlappen, und der zweiten Überlappungsbereiche, in denen die Elektrode 41 lediglich die Elektrode 43 überlappt, ergibt sich durch additive Farbmischung dann die in dem jeweiligen Bereich generierte Mischfarbe.

In Fig. 8b ist beispielhaft die sich bei Anlegung einer Spannung an die Elektroden 42 und 43 im Bereich 22 zeigende optische Information 71 verdeutlicht. Zur Herstellung dieser optischen Information sind hierbei die Elektroden 42 und 43 beispielsweise in der in Fig. 8a erläuterten Art und Weise ausgeformt.

Fig. 8a zeigt die Strukturierung der elektrisch leitfähigen Schicht 123 in einem Teilbereich des Bereichs 22. Die Elektroden 42 und 43 weisen eine Vielzahl von Teilelektroden 421 bzw. 431 auf, welche gemäß einem ein- oder zweidimensionalen Raster angeordnet sind und jeweils galvanisch miteinander verbunden sind. Das Raster besitzt eine Rasterweite von weniger als 300 µm, bevorzugt weniger als 200 µm, weiter bevorzugt weniger als 100 µm, so dass eine additive Farbmischung der ersten und zweiten Überlappungsbereiche bei Betrachtung durch einen menschlichen Betrachter erfolgt. Wie in Fig. 8a gezeigt, ist es besonders vorteilhaft, hier ein eindimensionales Raster zu verwenden. Der jeweilige Farbwert oder Grauwert im jeweiligen Bildpunkt wird nun durch die jeweilige Breite der Teilelektroden 421 bzw. 431 eingestellt, wie dies in Fig. 8a gezeigt ist. Weiter ist es auch möglich, die entsprechenden Farbwerte durch entsprechende Variationen der Rasterabstände einzustellen.

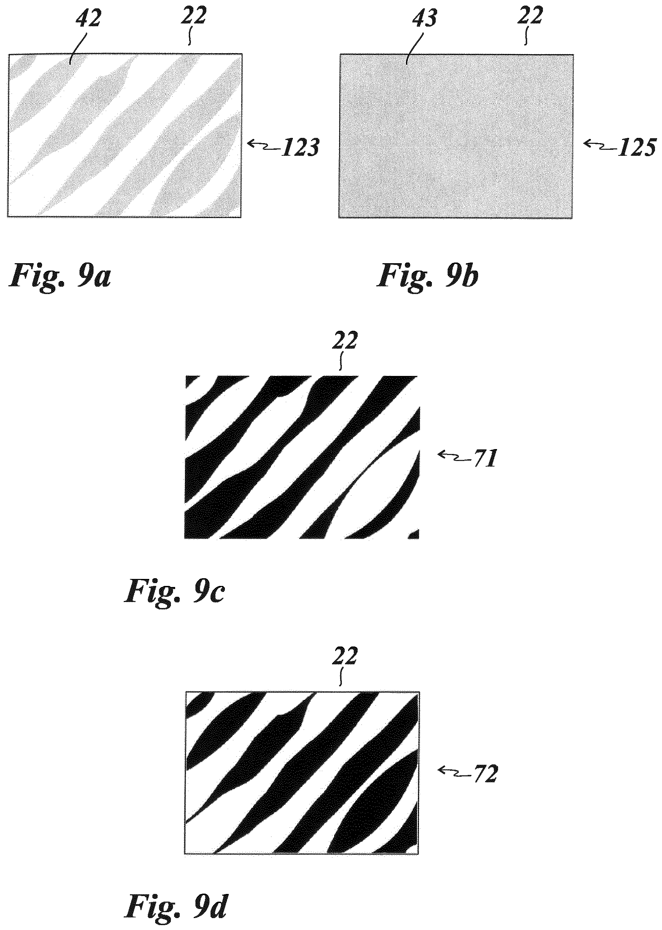

Weiter ist es auch möglich, die Elektroden 42 und 43 in unterschiedlichen Ebenen anzuordnen, wie bereits oben erläutert. So kann die Elektrode 42 beispielsweise wie in Fig. 9a gezeigt ausgeformt sein und die Elektrode 43 kann wie in Fig. 9b gezeigt vollflächig im Bereich 22 ausgeformt sein. Bei Anlegen einer Spannung an die Elektroden 42 und 43 ergibt sich so beispielsweise die in Fig. 9c gezeigte Information 71, bei der der erste Überlappungsbereich beispielsweise weiß und der zweite Überlappungsbereich schwarz erscheint. Bei einem Polaritätswechsel ergibt sich die in Fig. 9d gezeigte inverse Information 72, bei der beispielsweise der erste Überlappungsbereich schwarz und der zweite Überlappungsbereich weiß erscheint. Hierdurch ergibt sich eine inverse Farbmischung bei einem Polaritätswechsel.

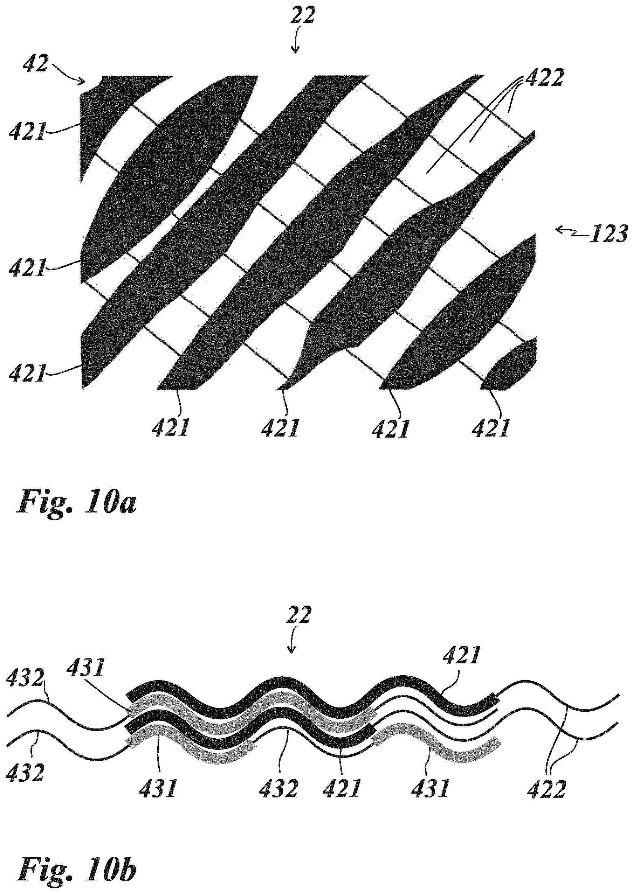

Fig. 10a verdeutlich eine besonders vorteilhafte Ausgestaltung der Elektrode 42. Wie in Fig. 10a gezeigt, ist die Elektrode 42 aus einer Vielzahl von Teilelektroden 421 aufgebaut, welche über eine Vielzahl von Verbindungsleiterbahnen 422 miteinander verbunden sind. Die Verbindungsleiterbahnen 422 sind hierbei gemäß einem weiteren Raster angeordnet. Die Leiterbahnen 422 besitzen vorzugsweise eine Breite weniger als 100 µm, weiter bevorzugt von weniger als 50 µm.

Fig. 10b verdeutlicht eine weitere mögliche Anordnung und Ausformung der Elektroden 42 und 43 für die Ausbildung eines Graustufenbildes. Wie in Fig. 10b verdeutlicht, weisen die Elektroden 42 und 43 jeweils eine Vielzahl von Teilelektroden 421 und 431 auf, welche gemäß einem eindimensionalen Raster abwechselnd angeordnet sind. Die Teilelektroden 421 und 431 sind hierbei linienförmig ausgebildet, wobei die Linie hier einen wellenlinienförmigen Verlauf besitzt. Die Teilelektroden 421 und 431 sind miteinander durch Leiterbahnen 432 verbunden.

Auch hier wird die Farbmischung durch den entsprechenden Flächenanteil der ersten Überlappungsbereiche und der zweiten Überlappungsbereiche in dem jeweiligen Bildpunkt eingestellt.

Fig. 11a zeigt eine weitere Ausführungsform des Aufbaus der Anzeigeeinrichtung 10 im Bereich 22.

Die Anzeigeeinrichtung ist wie die Anzeigeeinrichtung nach den Figuren Fig. 1a bis Fig. 4 aufgebaut, mit folgenden Unterschieden:
Es ist noch weiter eine weitere Elektrode 44 vorgesehen, die ebenfalls zumindest bereichsweise mit der Elektrode 41 überlappt und welche auf derselben Seite der Anzeigenschicht 122 wie die Elektroden 42 und 43 vorgesehen ist. Weiter ist noch optional eine zusätzliche weitere Elektrode 45 vorgesehen, welche ebenfalls auf der den Elektroden 42 und 43 zugewandten Seite der Anzeigenschicht 122 vorgesehen ist und welche ebenfalls zumindest bereichsweise in Überlappung mit der Elektrode 41 vorgesehen ist. Zusätzlich ist noch optional eine Maskierungsschicht 129 vorgesehen, welche in Betrachtungsrichtung oberhalb der Elektrode 41 vorgesehen ist und beispielsweise aus einem opaken Aufdruck besteht.

Der in Fig. 11a gezeigte Ausschnitt der Anzeigeeinrichtung 10 weist so die Maskierungsschicht 129, die dielektrische Schicht 11, die elektrisch leitfähige Schicht 121, die Anzeigenschicht 122, die elektrisch leitfähige Schicht 123, die dielektrische Schicht 124, die elektrisch leitfähige Schicht 125 und die dielektrische Schicht 126 auf. In der elektrisch leitfähigen Schicht 123 sind die Elektroden 42 und 44 ausgeformt und in der elektrisch leitfähigen Schicht 125 sind die Elektroden 43 und 45 ausgeformt. Bezüglich der Ausgestaltung dieser Schichten und der Ausformung der Elektroden wird auf die vorhergehenden Ausführungen zu den Figuren Fig. 1a bis Fig. 10b verwiesen.

Im einfachsten Fall ist die Elektrode 45 nicht vorgesehen und zusätzlich zu den Elektroden 42 und 43 lediglich die Elektrode 44 vorgesehen, welche zwischen der Elektrode 43 und der Anzeigeschicht 122 angeordnet ist. Die Elektroden 42 und 44 können auch in unterschiedlichen Ebenen der Anzeigeeinrichtung 10 vorgesehen sein und von unterschiedlichen, voneinander beabstandeten elektrisch leitfähigen Schichten der Anzeigeeinrichtung ausgebildet werden, wie dies bereits oben ausführlich erläutert worden ist. Von besonderem Vorteil ist hier, dass die Elektrode 43 unterhalb der Elektroden 42 und 44 angeordnet ist.

Die Elektrode 42 ist in Form einer ersten Information ausgebildet, beispielsweise wie in Fig. 6a gezeigt in Form eines Motivs, beispielsweise eines Sterns ausgeformt. Die Elektrode 44 ist in Form einer zweiten Information ausgebildet, beispielsweise ebenfalls in Form eines Motivs, beispielsweise eines Buchstabens oder einer Zahl oder eines Symbols ausgebildet. Die Elektrode 43 bildet vorzugsweise einen Hintergrund für die erste Information und die zweite Information aus und ist so beispielsweise wie in Fig. 6b gezeigt vollflächig im Bereich des Hintergrunds vorgesehen, oder lediglich in den nicht von den Elektroden 42 und 44 überlappten Bereichen der Elektrode 41 vorgesehen, wie beispielsweise in Fig. 5a gezeigt, oder wie beispielsweise in Fig. 3 gezeigt, ebenfalls strukturiert und zumindest teilweise in den mit den Elektroden 42 und 44 überlappenden Bereichen nicht vorgesehen.

Je nach Anlage einer Spannung an den Elektroden 42, 44 und 43 unterscheidet sich der sich für den Betrachter zeigende optische Effekt: Wird der eine Pol der Spannungsquelle mit der Elektrode 42 und der andere Pol der Spannungsquelle mit der Elektrode 44 und der Elektrode 43 verbunden, so zeigt sich die erste Information. Wird hierbei die Polarität gewechselt, so zeigt sich eine inverse Darstellung der ersten Information. Wird der eine Pol der Spannungsquelle mit der Elektrode 44 und der andere Pol der Spannungsquelle mit der Elektrode 42 und der Elektrode 43 verbunden, so zeigt sich die zweite Information. Bei Umkehrung der Polarität zeigt sich die zweite Information in inverser Darstellung. Wird die Elektrode 43 mit einem konstanten Spannungspotential verbunden und die Polarität der an den Elektroden 42 und 44 anliegenden Spannungsquelle gewechselt, so wechselt - bei gleich bleibendem Hintergrund - die Darstellung zwischen der ersten und zweiten Information beim Polaritätswechsel.

Zusätzlich ist es durch Einsatz der Elektrode 45 möglich, lediglich den Hintergrundbereich ohne erste und zweite Information, auch in inverser Darstellung zu zeigen. Hierzu ist es vorteilhaft, wenn die Elektrode 45 nicht die Anzeigenschicht 122 oder Bereich der Anzeigenschicht 122 mit dem Displaymaterial überlappt und/oder dass die Elektrode 45 vollflächig von der Maskierungsschicht 129 überlappt wird. Zur Erzielung dieses Effekts wird der eine Pol der Spannungsquelle mit der Elektrode 45 und der andere Pol der Spannungsquelle mit der Elektrode 43 und/oder den Elektroden 42 und 44 verbunden.

Fig. 11b zeigt eine vorteilhafte Verschaltung der Elektroden 42, 43, 44 und 45 mit einer vorzugsweise in der Anzeigeeinrichtung 10 angeordneten Energiequelle 33. Bei der Energiequelle 33 handelt es sich hierbei vorzugsweise um ein Piezoelement, welches je nach Biegerichtung einen Spannungsimpuls unterschiedlicher Polarität generiert. Wie in Fig. 11b gezeigt, ist hier zwischen den Elektroden 43 und 45 und den Polen der Spannungsquelle 33 ein Gleichrichter vorgesehen, hier ausgebildet als Halbwellen-Gleichrichter mit den Dioden 81. Durch den Gleichrichter wird sichergestellt, dass die Elektroden 43 und 45 unabhängig von der Polarität des von der Energiequelle 33 generierten Spannungsimpulses mit einem vorgegebenen elektrischen Potenzial belegt ist. Anstelle eines Halbwellen-Gleichrichters kann auch ein Brücken-Gleichrichter eingesetzt werden. Je nach Biegerichtung wird so die erste oder die zweite Information in dem Bereich 22 dargestellt, so dass mit sehr geringem schaltungstechnischem Aufwand ein sehr einprägsames Sicherheitsmerkmal generiert werden kann.

Wie bereits weiter oben für die Ausformung der Elektrode 42 ausgeführt, können die Elektroden 42 und 44 jeweils mehrere Teilelektroden aufweisen, die jeweils in Form eines Teilmotivs des jeweils dargestellten Motivs ausgeformt sind und welche durch Leiterbahnen miteinander verbunden sind.

Von besonderem Vorteil ist weiter, wenn die Elektroden 42 und 44 so ausgeformt sind, dass die erste und die zweite Information aus Sicht des menschlichen Betrachters in ein- und demselben Bereich erscheint. Eine hierfür geeignete Ausformung der Elektroden 42, 44 und 43 wird im Folgenden beispielhaft anhand der Figuren Fig. 12a bis Fig. 12j beschrieben.

Fig. 12a zeigt die Ausformung der Elektrode 42. Die Elektrode 42 weist eine Vielzahl von Teilelektroden 421 auf, welche über Leiterbahnen 422 galvanisch miteinander verbunden sind. Diese Teilelektroden 421 sind, wie in Fig. 12a gezeigt, hierbei so ausgeformt und angeordnet, dass sie eine erste Information, hier den Buchstaben "A" ausbilden. Die Teilelektroden 421 weisen jeweils eine Breite von weniger als 300 µm auf und sind bevorzugt, wie in Fig. 12a gezeigt, gemäß einem regelmäßigen, eindimensionalen Raster angeordnet. Weiter ist es auch möglich, dass die Teilelektroden 421 eine andere Formgebung, beispielsweise die Formgebung eines Punktes oder Viereckes besitzen und/oder gemäß einem zweidimensionalen Raster angeordnet sind.

Um das Muster zu generieren, gemäß dem die Elektrode 42 strukturiert ist, wird so die darzustellende Information, beispielsweise der Buchstabe "A" gemäß dem Raster abgetastet und eine Teilelektrode 421 in der entsprechenden Rasterzeile vorgesehen, wenn dort ein Vordergrundbereich der Information vorgesehen ist, wobei die Länge der Teilelektrode 421 und deren Anordnung der Länge des Vordergrundbereichs entlang der jeweiligen Rasterzeile entspricht.

Fig. 12b zeigt eine entsprechende Ausbildung der Elektrode 44. Auch diese weist eine Vielzahl von Teilelektroden 441 auf, welche galvanisch miteinander über Leiterbahnen 442 verbunden sind. Die Teilelektroden 441 weisen ebenfalls jeweils eine Breite von weniger als 300 µm auf und sind ebenfalls gemäß einem ein- oder zweidimensionalen Raster angeordnet. Bezüglich der Generierung des Musters, gemäß dem die Elektrode 44 strukturiert ist, wird auf die vorhergehenden Ausführungen zu Fig. 12a verwiesen. Die für die Elektroden 42 und 44 gewählten Raster sind so aufeinander entsprechend abgestimmt, dass eine Ineinanderrasterung der Teilelektroden 421 und 441 möglich ist.

Eine entsprechende Ineinanderrasterung der Elektroden 42 und 44 ist beispielhaft in Fig. 12c gezeigt. In dem in Fig. 12c gezeigten Fall werden für die Elektroden 42 und 44 Raster verwendet, die um jeweils eine halbe Periode zueinander verschoben sind, so dass, wie in Fig. 12c gezeigt, abwechselnd Teilelektroden 421 und 441 vorgesehen sind. Die Teilelektroden 421 und 441 können hierbei in ein- und derselben elektrisch leitfähigen Schicht ausgeformt sein, oder auch in verschiedenen, übereinander angeordneten elektrisch leitfähigen Schichten ausgeformt und passergenau aufeinander ausgerichtet sein.

Fig. 12d zeigt weiter die Ausformung der Elektrode 43 in dem Bereich 22. Die Elektrode 43 ist hier im Bereich 22 vollflächig vorgesehen und bildet den Hintergrund zu den beiden von den Elektroden 42 und 44 ausgebildeten Informationen. Wie bereits oben ausgeführt, kann die Umrandungslinie der Elektrode 43 oder die Formgebung der Elektrode 43 eine andere Formgebung besitzen, so dass der Hintergrund entsprechend musterförmig ausgestaltet ist.

Bei der entsprechenden Ausgestaltung der Elektroden 42, 44 und 43 gemäß Fig. 12e und Fig. 12f zeigt sich so im Bereich 22 bei Anlegen einer Spannung die in Fig. 12g gezeigte Information 71 und bei Anlegung einer inversen Spannung die in Fig. 12j gezeigte Information 72.

Es ist darauf hinzuweisen, dass die Figuren Fig. 12a bis 12j lediglich schematische Figuren darstellen und dass aufgrund der Ausbildung der Breite der Teilelektroden 421 und 441 die Rasterung der Information 71 und 72 für den menschlichen Betrachter verschwindet und so in ein und demselben Bereich je nach Polarität der Spannung als Information 71 ein "Z" und als Information 72 ein "A" sichtbar ist.

Eine weitere vorteilhafte Ausführungsform wird im Weiteren anhand der Figuren Fig. 13a bis Fig. 13h verdeutlicht.

Bei diesen Ausführungsbeispielen weisen zum Einen die Elektroden 42 und 44, wie bereits vorhergehend anhand der Figuren Fig. 12a bis Fig. 12j erläutert, eine Vielzahl von Teilelektroden 421 und 441 auf, welche mittels Leiterbahnen 422 bzw. 442 miteinander verbunden sind. Die Teilelektroden 421 und 441 sind ineinander gerastert und bilden jeweils eine jeweilige Information, beispielsweise ein Quadrat und eine Kreisscheibe aus. Bezüglich der Ausbildung der Teilelektroden 421 und 441 und deren Anordnung wird auf die diesbezüglichen Ausführungen zu den Figuren Fig. 12a bis Fig. 12j verwiesen.

Im Weiteren weisen auch die Elektroden 43 und 45 jeweils eine Vielzahl von Teilelektroden 431 bzw. 451 auf, welche mittels Leiterbahnen 432 bzw. 452 galvanisch miteinander verbunden sind. Die Teilelektroden 431 und 451 weisen hierbei jeweils eine Breite von weniger als 300 µm auf und sind gemäß einem jeweiligen Raster angeordnet, wobei die Raster jeweils so gewählt sind, dass die Teilelektroden 431 und 451 ineinander gerastert sind, wie dies in Fig. 13a gezeigt ist. Die Teilelektroden 431 und 451 sind damit im Prinzip wie die Teilelektroden 421 und 441 ausgeformt und angeordnet, so dass auf die diesbezüglichen Ausführungen zu den Figuren Fig. 12a bis Fig. 12j verwiesen wird.

Im Gegensatz zu den Teilelektroden 421 und 441 sind die Teilelektroden 431 und 451 beide über den gesamten Bereich des Hintergrunds geführt und bilden so keine unterschiedlichen Motive aus.

Durch den Flächenanteil der Teilelektroden 431 und 451 im jeweiligen Flächenbereich wird hierbei der Grauwert oder Farbwert (bei Verwendung unterschiedlicher Primärfarben für die Flüssigkeit/Teilchen) festgelegt, der für den Betrachter in dem jeweiligen Flächenbereich sichtbar ist. Bei der in Fig. 13a gezeigten gleichförmigen Ausformung der Teilelektroden 431 und 451 und damit gleichen Flächenbelegungsdichte über den gesamten Bereich 22 ist der Grauwert bzw. Farbwert des von den Elektroden 431 und 451 bei Anlegung einer Spannung generierten Farbwerts unabhängig von der Polarisation der Spannungsquelle gleich, wie sich dies aus den Figuren Fig. 13c und Fig. 13f ergibt. Unterscheidet sich weiter beispielsweise die Breite der Elektroden 431 und 451, ergibt sich je nach Spannungspolarität eine unterschiedliche Graustufe bzw. ein unterschiedlicher Farbwert in dem Hintergrundbereich, beispielsweise ein Grün oder Orange. Weiter ist es auch möglich, die Teilelektroden 431 und 451 beispielsweise wie die Teilelektroden 431 und 421 gemäß Fig. 8a in Form eines Graustufenbildes auszuformen, so dass sich als Hintergrund ein entsprechendes Graustufenbild, beispielsweise das in Fig. 8b gezeigte Graustufenbild, ergibt.

Die Elektroden 43 und 45 sind wie in Fig. 11a gezeigt unterhalb der Elektroden 42 und 44 angeordnet, wobei im Unterschied zu der Darstellung nach Fig. 11a die Elektroden 43 und 45 innerhalb des Bereichs 22 vorgesehen sind.

Wie in Fig. 13d und Fig. 13g gezeigt, zeigen sich bei Anlegen einer Spannung zwischen den Elektroden 42 und 44 je nach Polarität der Spannung zum einen eine Darstellung des ersten Motivs und zum anderen eine Darstellung des zweiten Motivs. Die durch die Elektroden 43 und 45 einerseits und die Elektroden 42 und 44 andererseits generierten Effekte überlagern sich, so dass sich je nach Polarität der an diesen Elektroden anliegenden Spannung beispielsweise die in den Figuren Fig. 13e und Fig. 13h gezeigten unterschiedlichen Informationen zeigen. Da hier die Elektroden 42 und 44 näher zur Anzeigenschicht 122 hin angeordnet sind, hat der durch diese Elektroden generierte Effekt prioritäre Wirkung vor den durch die Elektroden 43 und 45 generierten Effekten. Damit zeigt sich beispielsweise vor einem durch die Ausformung der Teilelektroden 431 und 451 bestimmten Hintergrund abhängig von der Polarität der an den Elektroden 42 und 44 anliegenden Spannung das erste Motiv bzw. das zweite Motive oder eine entsprechende invertierte Darstellung einer Überlagerung des ersten und zweiten Motivs, je nach Ausrichtung und Spannungspotenzial der Teilelektroden 431 und 451.

So erscheinen beispielsweise bei einem Wechsel der Polarität ein Flip zwischen einem weißen Kreis und einem schwarzen Quadrat vor einem grauen Hintergrund und ein schwarzer Kreis mit einem weißen Quadrat mit einem grauen Hintergrund.

Anhand von Fig. 14 wird nun ein weiteres Ausführungsbeispiel beschrieben, bei dem als optische Information ein Motiv vor einem einfarbigen Hintergrund generiert wird.

Bei diesem Ausführungsbeispiel weist die Anzeigeeinrichtung im Bereich 22 den in Fig. 14 verdeutlichten Schichtaufbau mit der Maskierungsschicht 129, der dielektrischen Schicht 120, der elektrisch leitfähigen Schicht 121, der Anzeigenschicht 122, der elektrisch leitfähigen Schicht 123 mit den Elektroden 42 und 44, der dielektrischen Schicht 124, der elektrisch leitfähigen Schicht 125 mit den Elektroden 43 und 45 und der dielektrischen Schicht 126 auf. Die Anzeigeeinrichtung ist so in gleicher Weise wie nach Fig. 11a aufgebaut, bis auf dass die Elektrode 44 so angeordnet ist, dass diese im Bereich 22 keine optische Wirkung entfaltet. Bezüglich der Ausbildung der vorgenannten Schicht wird so auf die obigen Ausführungen zu der Figur 11a bzw. Fig. 1 bis Fig. 4 verwiesen.

Die Elektrode 42 ist in Form eines Motivs ausgeformt, welches sich auch aus verschiedenen Teilmotiven zusammensetzen kann. Bezüglich der Ausformung der Elektrode 42 wird so auf die diesbezüglichen Ausführungen nach Fig. 11a verwiesen. Die Elektrode 44 überlappt die Elektrode 41 in einem Bereich, der von der Maskierungsschicht 129 abgedeckt wird oder in einem Bereich, in welchem die Anzeigenschicht 122 nicht vorgesehen ist oder in der Anzeigenschicht 122 kein Displaymaterial vorgesehen ist. Die Elektrode 43 ist im Bereich des Hintergrunds des Motivs ausgeformt, wie dies in Fig. 14 angedeutet ist. Hierbei ist auch möglich, wie bereits zu Fig. 11a ausgeführt, dass die Elektrode 43 in dem Bereich, in dem diese die Elektrode 42 überlappt, strukturiert ist, wie dies beispielsweise in Fig. 3 gezeigt ist. Die Elektrode 45 überlappt die Elektrode 41 ebenfalls zumindest bereichsweise entweder in einem Bereich, der optisch von der Maskierungsschicht 129 abgedeckt wird, und/oder in dem die Anzeigenschicht 122 nicht vorgesehen oder kein Displaymaterial in der Anzeigenschicht 122 vorgesehen ist.

Die Kontaktierung der Elektroden 42, 43, 44 und 45 mit der Energiequelle 33 erfolgt vorzugsweise gemäß der Verschaltung nach Fig. 11b.

Beim Umpolen der Energiequelle 33 wird die Elektrode 42 zwischen Positiv- und Negativ-Potential umgeschaltet. Dadurch wird das Motiv, beispielsweise der vorhergehend gezeigte Stern oder ein Buchstabe "A", beispielsweise zwischen Weiß und Schwarz umgeschaltet. Die Elektrode 44 wechselt gleichermaßen ihre Polarität, aber in die entgegengesetzte Richtung. Dadurch werden in der Elektrode 41 auch entgegengesetzte Ladungsträger induziert (= Ladungsausgleich). Wird hierbei die Polarität der Elektrode 43 beibehalten, beispielsweise indem diese mittels einer Diode wie in Fig. 11b gezeigt angesteuert wird, befindet sich der Hintergrundbereich im selben Schaltzustand (z. B. positiv, weißer Hintergrund). Der Ladungsausgleich wird hier mittels der Elektrode 45 realisiert, welche eine entgegengesetzte Polarität zu der Elektrode 43 aufweist. Durch Umpolen der an den Elektroden 42 und 44 anliegenden Energiequelle kann hierbei somit das Motiv sichtbar (beispielsweise schwarzes Motiv vor weißem Hintergrund) oder unsichtbar (beispielsweise weißes Motiv vor weißem Hintergrund) geschaltet werden.

Im Weiteren kann durch entsprechende Umpolung der an den Elektroden 43 und 45 anliegenden Spannung die Farbe des Hintergrunds entsprechend umgeschaltet werden und - bei Beibehaltung der Polarität der an den Elektroden 42 und 44 anliegenden Spannung - ebenfalls bei einer Umpolung eine inverse Darstellung des Motivs sichtbar bzw. unsichtbar gemacht werden.

## Patentansprüche

1. Anzeigeeinrichtung (10), insbesondere in Form eines mehrschichtigen Folienkörpers, wobei die Anzeigeeinrichtung (10) in einem ersten Bereich (22) eine erste Elektrode (41), eine zweite Elektrode (42), eine dritte Elektrode (43) und eine Anzeigenschicht (122) mit einem Displaymaterial aufweist, wobei die Anzeigenschicht (122) zwischen der ersten Elektrode (41) und der zweiten Elektrode (42) angeordnet ist und die dritte Elektrode (43) auf der der ersten Elektrode (41) abgewandten Seite der Anzeigenschicht (122) angeordnet ist, wobei die erste Elektrode (41) als potenzialgetrennte Elektrode ausgebildet ist und die erste Elektrode (41) bei Betrachtung senkrecht zu der von der Anzeigenschicht (122) aufgespannten Ebene sowohl die zweite Elektrode (42) als auch die dritte Elektrode (43) zumindest bereichsweise überlappt,
**dadurch gekennzeichnet,**
**dass** die zweite Elektrode (42) in Form eines im ersten Bereich (22) angeordneten Motivs ausgeformt ist und die dritte Elektrode (43) bei Betrachtung senkrecht zu der Anzeigenschicht (122) aufgespannten Ebene zumindest in einem Hintergrundbereich des Motivs vorgesehen ist, so dass sich insbesondere bei einem Polaritätswechsel der an der zweiten und dritten Elektrode anliegenden Spannung eine invertierte Darstellung des Motivs ergibt.

2. Anzeigeeinrichtung (10) nach Anspruch 1,
**dadurch gekennzeichnet,**
**dass** die erste Elektrode (41) allseits von dielektrischen Schichten umgeben ist.

3. Anzeigeeinrichtung (10) nach einem der vorhergehenden Ansprüche,
**dadurch gekennzeichnet,**
**dass** die erste, zweite und/oder dritte Elektrode (41, 42, 43) transparent ausgebildet ist.

4. Anzeigeeinrichtung (10) nach einem der vorhergehenden Ansprüche,
**dadurch gekennzeichnet,**
**dass** das Displaymaterial so ausgebildet ist, dass es bei Anlegen einer Spannung zwischen der zweiten und der dritten Elektrode (42, 43) in dem Überlappungsbereich der ersten und zweiten Elektrode (41, 42) und dem Überlappungsbereich der ersten und der dritten Elektrode (41, 43) unterschiedliche optische Eigenschaften zeigt, insbesondere unterschiedliche Farben zeigt, und/oder dass das Displaymaterial eine Vielzahl von elektrisch geladenen Teilchen aufweist, die in einer Flüssigkeit dispergiert sind, wobei sich die Flüssigkeit und die Teilchen in ihren optischen Eigenschaften unterscheiden, insbesondere in ihrer Farbe unterscheiden, und/oder dass das Displaymaterial eine Vielzahl von ersten Teilchen und eine Vielzahl von zweiten Teilchen aufweist, wobei die ersten Teilchen sich von den zweiten Teilchen in Bezug auf ihre elektrische Ladung und in Bezug auf ihre optischen Eigenschaften unterscheiden, wobei insbesondere die ersten Teilchen positiv geladen sind und die zweiten Teilchen negativ geladen sind, und wobei insbesondere die ersten Teilchen und die zweiten Teilchen bei Betrachtung in Reflexion unterschiedliche optische Eigenschaften zeigen, insbesondere sich in ihrer Farbe, in ihrem Reflexionsgrad und/oder in ihrem Streuverhalten unterscheiden.

5. Anzeigeeinrichtung (10) nach einem der vorhergehenden Ansprüche,
**dadurch gekennzeichnet,**
**dass** das Motiv aus mehreren Teilmotiven aufgebaut ist, dass die zweite und/oder dritte Elektrode (42, 43) mehrere durch Leiterbahnen verbundene Teilelektroden (421, 431) aufweist, die jeweils in Form eines der Teilmotive ausgeformt sind, wobei die Leiterbahnen vorzugsweise eine Breite von weniger als 300 µm, insbesondere von weniger als 100 µm aufweisen, und/oder dass die zweite und dritte Elektrode (42, 43) so ausgeformt und angeordnet sind, dass bei einem Polaritätswechsel der an der zweiten und dritten Elektrode anliegenden Spannung eine Bewegungseffekt generiert wird und sich insbesondere die Illusion einer Bewegung eines Objekts als optischer Effekt zeigt.

6. Anzeigeeinrichtung (10) nach Anspruch 5,
**dadurch gekennzeichnet,**
**dass** die zweite und/oder dritte Elektrode (42, 43) jeweils zwei oder mehrere Teilelektroden (421, 431) aufweist, die jeweils in Form eines Segments eines insbesondere rotationssymmetrischen Objekts ausgeformt sind, wobei abwechselnd eine der Teilelektroden (421, 431) der zweiten Elektrode (42) und Bereiche der dritten Elektrode (43) angeordnet sind.

7. Anzeigeeinrichtung (10) nach einem der vorhergehenden Ansprüche,
**dadurch gekennzeichnet,**
**dass** die zweite Elektrode mehrere galvanisch miteinander verbundene Teilelektroden (421) aufweist, die gemäß einem ein- oder zweidimensionalen Raster mit einer Rasterweite von weniger als 300 µm, bevorzugt weniger als 200 µm, weiter bevorzugt weniger als 100 µm, angeordnet sind, wobei die Teilelektroden (421) insbesondere jeweils eine punktförmige oder linienförmige Formgebung besitzen, wobei insbesondere die Breite der Teilelektroden (421) oder die Rasterabstände des Rasters zur Generierung eines Graustufenbildes variiert sind, und/oder wobei insbesondere das Raster ein geometrisch transformiertes Raster ist und die Teilelektroden (421) insbesondere eine wellenlinienförmige Formgebung besitzen.

8. Anzeigeeinrichtung (10) nach einem der Ansprüche 1 bis 7,
**dadurch gekennzeichnet,**
**dass** die zweite und die dritte Elektrode (42, 43) sich in ihrer Beabstandung von der ersten Elektrode (41) unterscheiden, insbesondere von Bereichen unterschiedlicher elektrisch leitfähiger Schichten (123, 125) gebildet sind, die voneinander in Bezug auf die Normale zu der von der ersten Elektrode (41) aufgespannten Ebene beabstandet sind.

9. Anzeigeeinrichtung (10) nach Anspruch 8,
**dadurch gekennzeichnet,**
**dass** die zweite Elektrode (42) zwischen der ersten Elektrode (41) und der dritten Elektrode (43) angeordnet ist und sich die zweite Elektrode (42) und die dritte Elektrode (43) in Bezug auf die von der Anzeigenschicht (122) aufgespannten Ebene zumindest bereichsweise überlappen, insbesondere weniger als 50 %, weiter bevorzugt weniger als 25 % überlappen, und/oder dass die dritte Elektrode (43) die zweite Elektrode (42) vollständig überlappt.

10. Anzeigeeinrichtung (10) nach einem der Ansprüche 8 bis 9,
**dadurch gekennzeichnet,**
**dass** der Abstand zwischen der ersten und zweiten Elektrode (41, 42), der Abstand zwischen der ersten und dritten Elektrode (41, 43) und der Abstand zwischen der zweiten und dritten Elektrode (42, 43) so gewählt ist, dass c23 kleiner als 1/(1/c12 + 1/c13) ist, wobei c12 die Kapazität zwischen der ersten und zweiten Elektrode, c13 die Kapazität zwischen der ersten und dritten Elektrode und c23 die Kapazität zwischen der zweiten und dritten Elektrode ist, und/oder dass die dritte Elektrode (43) im Bereich der zweiten Elektrode (42) Vertiefungen aufweist und insbesondere im Bereich der zweiten Elektrode (42) der Abstand zwischen der ersten Elektrode (41) und der dritten Elektrode (43) größer ist als in den Bereichen, in denen die dritte Elektrode (43), nicht jedoch die zweite Elektrode (42) vorgesehen ist, wobei insbesondere d1 etwa d2 und d3 deutlich größer als d2 ist, wobei d1 der Abstand zwischen der ersten Elektrode und der zweiten Elektrode, d2 der Abstand zwischen der ersten Elektrode und den Erhebungen der dritten Elektrode und d3 der Abstand zwischen der ersten Elektrode und den Vertiefungen der dritten Elektrode ist.

11. Anzeigeeinrichtung (10) nach einem der vorhergehenden Ansprüche,
**dadurch gekennzeichnet,**
**dass** die Anzeigeeinrichtung (10) eine vierte Elektrode (44) aufweist, wobei die zweite und die vierte Elektrode (42, 44) zwischen der ersten und der dritten Elektrode (41, 43) angeordnet ist und die erste und die vierte Elektrode (41, 44) sich bei Betrachtung senkrecht zu einer von der Anzeigenschicht (122) aufgespannten Ebene zumindest bereichsweise überlappen.

12. Anzeigeeinrichtung (10) nach Anspruch 11,
**dadurch gekennzeichnet,**
**dass** die vierte Elektrode (44) innerhalb des ersten Bereichs (22) angeordnet ist, wobei die zweite Elektrode (42) eine erste Information (71) und die vierte Elektrode (44) eine zweite Information (72) ausbilden, und/oder dass außerhalb des ersten Bereichs (22) eine fünfte Elektrode (45) vorgesehen ist und die erste und die fünfte Elektrode (41, 45) sich bei Betrachtung senkrecht zu einer von der Anzeigenschicht (122) aufgespannten Ebene zumindest bereichsweise überlappen, und/oder dass die dritte Elektrode (43) in zumindest den von der zweiten und der vierten Elektrode (42, 44) nicht bedeckten Bereichen des ersten Bereichs (22) vorgesehen ist.

13. Anzeigeeinrichtung (10) nach einem der Ansprüche 11 oder 12,
**dadurch gekennzeichnet,**
**dass** die zweite Elektrode (42) eine Vielzahl von galvanisch miteinander verbundenen ersten Teilelektroden (421) aufweist, die so ausgeformt und angeordnet sind, dass sie die erste Information (71) ausbilden, dass die vierte Elektrode (44) eine Vielzahl von galvanisch miteinander verbundenen zweiten Teilelektroden (441) aufweist, die so ausgeformt und angeordnet sind, dass sie die zweite Information (72) ausbilden, dass die ersten und zweiten Teilelektroden (421, 441)jeweils eine Breite von weniger als 300 µm aufweisen und dass die ersten und zweiten Teilelektroden (421, 441) ineinander gerasterte angeordnet sind, insbesondere abwechselnd angeordnet sind, wobei insbesondere die ersten und zweiten Teilelektroden (421, 441) jeweils eine linienförmige Formgebung besitzen und dass die ersten und zweiten Teilelektroden (421, 441) gemäß einem eindimensionalen Raster mit einer Rasterweite von weniger als 750 µm angeordnet sind.

14. Anzeigeeinrichtung (10) nach einem der Ansprüche 11 bis 13,
**dadurch gekennzeichnet,**
**dass** innerhalb des ersten Bereichs (22) eine fünfte Elektrode (45) vorgesehen ist, die auf der der ersten Elektrode (41) abgewandten Seite der Anzeigenschicht (122) angeordnet ist, dass die dritte Elektrode (43) eine Vielzahl von galvanisch miteinander verbundenen dritten Teilelektroden (431) aufweist, dass die fünfte Elektrode (45) eine Vielzahl von galvanisch miteinander verbundenen vierten Teilelektroden (451) aufweist, dass die dritten und vierten Teilelektroden (431, 451) jeweils eine Breite von weniger als 300 µm aufweisen und dass die dritten und vierten Teilelektroden (431, 451) ineinander gerastet angeordnet sind, insbesondere abwechselnd angeordnet sind, und/oder dass die Anzeigeeinrichtung (10) einen Gleichrichter aufweist, wobei einer der beiden Ausgänge des Gleichrichters mit der dritten Elektrode (43) und der andere der Ausgänge des Gleichrichters mit der fünften Elektrode (45) verbunden ist, und dass die Anzeigeeinrichtung eine Energiequelle (33) aufweist, wobei der eine der Ausgänge der Energiequelle (33) mit einem der Eingänge des Gleichrichters und mit der zweiten Elektrode (42) verbunden ist, und der andere der Ausgänge der Energiequelle (33) mit dem anderen der Eingänge des Gleichrichters und mit der vierten Elektrode (44) verbunden ist, wobei die Energiequelle (33) insbesondere ein Piezoelement ist.

15. Anzeigeeinrichtung (10) nach einem der vorhergehenden Ansprüche,
**dadurch gekennzeichnet,**
**dass** die Anzeigeeinrichtung (10) ein oder mehrere optische Sicherheitselemente aufweist, die insbesondere ausgewählt sind aus: beugungsoptisches Sicherheitselement, Sicherheitselement enthaltend ein Dünnfilmschichtsystem, welches insbesondere einen blickwinkelabhängigen Farbverschiebungseffekt generiert, Sicherheitselement enthaltend optisch variable Pigmente, Sicherheitselement enthaltend Mikrolinsen, Sicherheitselement enthaltend Flüssigkristalle.

## Claims

1. Display device (10), in particular in the form of a multi-layer film body, wherein the display device (10) has, in a first region (22), a first electrode (41), a second electrode (42), a third electrode (43) and a display layer (122) having a display material, wherein the display layer (122) is arranged between the first electrode (41) and the second electrode (42), and the third electrode (43) is arranged on the side of the display layer (122) facing away from the first electrode (41), wherein the first electrode (41) is formed as a galvanically isolated electrode, and, when viewed perpendicularly to the plane spanned by the display layer (122), the first electrode (41) at least regionally overlaps both the second electrode (42) and the third electrode (43),
**characterised in that**
the second electrode (42) is shaped in the form of a motif arranged in the first region (22), and, when viewed perpendicularly to the plane spanning the display layer (122), the third electrode (43) is provided at least in a background region of the motif, such that, in particular when there is a change in polarity of the voltage applied to the second and third electrode, the result is an inverted depiction of the motif.

2. Display device (10) according to claim 1,
**characterised in that**
the first electrode (41) is surrounded on all sides by dielectric layers.

3. Display device (10) according to one of the preceding claims,
**characterised in that**
the first, second and/or third electrode (41, 42, 43) are formed transparently.

4. Display device (10) according to one of the preceding claims,
**characterised in that**
the display material is formed in such a way that, when applying a voltage between the second and the third electrode (42, 43), different optical properties are displayed, in particular different colours are displayed, in the overlapping region of the first and second electrode (41, 42) and the overlapping region of the first and third electrode (41, 43), and/or the display material has a plurality of electrically charged particles which are dispersed in a fluid, wherein the fluid and the particles differ in terms of their optical properties, in particular in terms of their colour, and/or the display material has a plurality of first particles and a plurality of second particles, wherein the first particles differ from the second particles in terms of their electrical charge and in terms of their optical properties, wherein the first particles in particular are positively charged and the second particles are negatively charged, and wherein in particular the first particles and the second particles display different optical properties when viewed in reflection, in particular in terms of their colour, in terms of their degree of reflection and/or in terms of their dispersion behaviour.

5. Display device (10) according to one of the preceding claims,
**characterised in that**
the motif is constructed from several partial motifs, the second and/or third electrode (42, 43) has several partial electrodes (421, 431) connected by conductor tracks, said partial electrodes (421, 431) each being shaped in the form of one of the partial motifs, wherein the conductor tracks preferably have a width of less than 300 µm, in particular of less than 100 µm, and/or the second and third electrode (42, 43) are shaped and arranged in such a way that, when there is a change in polarity of the voltage applied to the second and third electrodes, a movement effect is generated, and in particular the illusion of a movement of an object is displayed as an optical effect.

6. Display device (10) according to claim 5,
**characterised in that**
the second and/or third electrode (42, 43) each have two or more partial electrodes (421, 431) which are each shaped in the form of a segment of an object that is rotationally symmetrical in particular, wherein one of the partial electrodes (421, 431) of the second electrode (42) and regions of the third electrode (43) are arranged alternately.

7. Display device (10) according to one of the preceding claims,
**characterised in that**
the second electrode has several partial electrodes (421) that are galvanically connected to one another, said partial electrodes (421) being arranged according to a one- or two-dimensional grid with a grid width of less than 300 µm, preferably less than 200 µm, further preferably less than 100 µm, wherein the partial electrodes (421) in particular each have a punctiform or linear shaping, wherein in particular the width of the partial electrodes (421) or the grid spacings of the grid are varied to generate a grey-scale image, and/or wherein in particular the grid is a geometrically transformed grid, and the partial electrodes (421) have an undulating shape, in particular.

8. Display device (10) according to one of claims 1 to 7,
**characterised in that**
the second and the third electrode (42, 43) differ in terms of their spacing from the first electrode (41), in particular from regions formed from different electrically conductive layers (123, 125), which are spaced apart from one another in terms of the normal relative to the plane spanned by the first electrode (41).

9. Display device (10) according to claim 8,
**characterised in that**
the second electrode (42) is arranged between the first electrode (41) and the third electrode (43), and the second electrode (42) and the third electrode (43) overlap at least regionally in terms of the plane spanned by the display layer (122), in particular overlap by less than 50%, further preferably by less than 25%, and/or the third electrode (43) completely overlaps the second electrode (42).

10. Display device (10) according to one of claims 8 to 9,
**characterised in that**
the distance between the first and second electrode (41, 32), the distance between the first and third electrode (41, 43) and the distance between the second and third electrode (42, 43) is chosen in such a way that c23 is less than 1/(1/c12 + 1/c13), wherein c12 is the capacitance between the first and second electrode, c13 is the capacitance between the first and third electrode and c23 is the capacitance between the second and third electrode, and/or the third electrode (43) has indents in the region of the second electrode (42), and, in particular in the region of the second electrode (42), the distance between the first electrode (41) and the third electrode (43) is greater than in the regions in which the third electrode (43), however not the second electrode (42), is provided, wherein in particular d1 is approximately d2 and d3 is significantly greater than d2, wherein d1 is the distance between the first electrode and the second electrode, d2 is the distance between the first electrode and the protrusions of the third electrode and d3 is the distance between the first electrode and the indents of the third electrode.

11. Display device (10) according to one of the preceding claims,
**characterised in that**
the display device (10) has a fourth electrode (44), wherein the second and the fourth electrode (42, 44) is arranged between the first and the third electrode (41, 43), and, when viewed perpendicularly to a plane spanned by the display device (122), the first and the fourth electrode (41, 44) overlap at least regionally.

12. Display device (10) according to claim 11,
**characterised in that**
the fourth electrode (44) is arranged inside the first region (22), wherein the second electrode (42) forms a first piece of information (71) and the fourth electrode (44) forms a second piece of information (72), and/or a fifth electrode (45) is provided outside the first region (22), and, when viewed perpendicularly to the plane spanned by the display device (122), the first and the fifth electrode (41, 45) overlap at least regionally, and/or the third electrode (43) is provided in at least the regions of the first region (22) that are not covered by the second and the fourth electrode (42, 44).

13. Display device (10) according to one of claims 11 or 12,
**characterised in that**
the second electrode (42) has a plurality of first partial electrodes (421) that are galvanically connected to one another and are shaped and arranged in such a way that they form the first piece of information (71), the fourth electrode (44) has a plurality of second partial electrodes (441) that are galvanically connected to one another and are shaped and arranged in such a way that they form the second piece of information (72), the first and second partial electrodes (421, 441) each have a width of less than 300 µm, and the first and second partial electrodes (421, 441) are arranged to be interlocked with one another, in particular arranged to be alternating, wherein in particular the first and second partial electrodes (421, 441) each have a linear shaping, and the first and second partial electrodes (421, 441) are arranged according to a one-dimensional grid having a grid width of less than 750 µm.

14. Display device (10) according to one of claims 11 to 13,
**characterised in that**
a fifth electrode (45) is provided inside the first region (22), said fifth electrode (45) being arranged on the side of the display layer (122) facing away from the first electrode (41), the third electrode (43) has a plurality of third partial electrodes (431) that are galvanically connected to one another, the fifth electrode (45) has a plurality of fourth partial electrodes (451) that are galvanically connected to one another, the third and fourth partial electrodes (431, 451) each have a width of less than 300 µm, and the third and fourth partial electrodes (431, 451) are arranged to be interlocked with one another, in particular are arranged to be alternating, and/or the display device (10) has a rectifier, wherein one of the two outputs of the rectifier is connected to the third electrode (43) and the other of the outputs of the rectifier is connected to the fifth electrode (45), and the display device has an energy source (33), wherein one of the outputs of the energy source (33) is connected to one of the inputs of the rectifier and to the second electrode (42), and the other output of the energy source (33) is connected to the other input of the rectifier and to the fourth electrode (44), wherein the energy source (33) is a Piezo element in particular.

15. Display device (10) according to one of the preceding claims,
**characterised in that**
the display device (10) has one or more optical security elements which are selected in particular from the following: optically diffractive security element, security element containing a thin film layer system which generates, in particular, a colour shift effect that is dependent on the viewing angle, security element containing optically variable pigments, security element containing micro lenses, security element containing liquid crystals.

## Revendications

1. Dispositif d'affichage (10), en particulier sous la forme d'un corps en feuille multicouche, dans lequel le dispositif d'affichage (10) présente, dans une première zone (22), une première électrode (41), une deuxième électrode (42), une troisième électrode (43) et une couche d'affichage (122) avec un matériau d'affichage, dans lequel la couche d'affichage (122) est disposée entre la première électrode (41) et la deuxième électrode (42), et la troisième électrode (43) est disposée sur le côté opposé à la première électrode (41) de la couche d'affichage (122), dans lequel la première électrode (41) est réalisée en tant qu'électrode séparée du potentiel et, lors d'une observation perpendiculairement au plan défini par la couche d'affichage (122), la première électrode (41) recouvre la deuxième électrode (42) tout comme la troisième électrode (43) au moins par endroits,
**caractérisé en ce**
**que** la deuxième électrode (42) est configurée en forme d'un motif disposé dans la première zone (22) et, lors d'une observation perpendiculairement au plan défini par la couche d'affichage (122), la troisième électrode (43) est prévue au moins dans une zone d'arrière-plan du motif de sorte qu'en particulier lors d'un changement de polarisation de la tension appliquée à la deuxième et troisième électrode, une représentation inversée du motif est obtenue.

2. Dispositif d'affichage (10) selon la revendication 1,
**caractérisé en ce**
**que** la première électrode (41) est entourée de tous côtés par des couches diélectriques.

3. Dispositif d'affichage (10) selon l'une des revendications précédentes,
**caractérisé en ce**
**que** la première, la deuxième et/ou la troisième électrode (41, 42, 43) est réalisée de manière transparente.

4. Dispositif d'affichage (10) selon l'une des revendications précédentes,
**caractérisé en ce**
**que** le matériau d'affichage est réalisé de manière à ce que, lors d'une application d'une tension entre la deuxième et la troisième électrode (42, 43), il présente différentes propriétés optiques, présente en particulier différentes couleurs, dans la zone de recouvrement de la première et la deuxième électrode (41, 42) et la zone de recouvrement de la première et de la troisième électrode (41, 43), et/ou que le matériau d'affichage présente une pluralité de particules chargées électriquement, lesquelles sont dispersées dans un liquide, dans lequel le liquide et les particules diffèrent de par leurs propriétés optiques, en particulier de par leur couleur, et/ou que le matériau d'affichage présente une pluralité de premières particules et une pluralité de deuxièmes particules, dans lequel les premières particules diffèrent des deuxièmes particules par rapport à leur charge électrique et par rapport à leurs propriétés optiques, dans lequel en particulier les premières particules sont chargées positivement et les deuxièmes particules sont chargées négativement, et dans lequel en particulier les premières particules et les deuxièmes particules, lors d'une observation en réflexion, présentent des propriétés optiques différentes, diffèrent en particulier de par leur couleur, de par leur facteur de réflexion et/ou de par leur comportement dispersif.

5. Dispositif d'affichage (10) selon l'une des revendications précédentes,
**caractérisé en ce**
**que** le motif est structuré à partir de plusieurs motifs partiels, que la deuxième et/ou troisième électrode (42, 43) présente plusieurs électrodes partielles (421, 431) reliées par des pistes conductrices, lesquelles sont respectivement configurées en forme de l'un des motifs partiels, dans lequel les pistes conductrices présentent de préférence une largeur de moins de 300 µm, en particulier de moins de 100 µm, et/ou que les deuxième et troisième électrodes (42, 43) sont configurées et disposées de manière à ce que lors d'un changement de polarité de la tension appliquée à la deuxième et troisième électrode, un effet de mouvement soit généré et qu'en particulier l'illusion d'un mouvement d'un objet en tant qu'effet optique se présente.

6. Dispositif d'affichage (10) selon la revendication 5,
**caractérisé en ce**
**que** la deuxième et/ou troisième électrode (42, 43) présente respectivement deux ou plusieurs électrodes partielles (421, 431), lesquelles sont respectivement configurées en forme d'un segment d'un objet en particulier à symétrie de rotation, dans lequel l'une des électrodes partielles (421, 431) de la deuxième électrode (42) et des zones de la troisième électrode (43) sont disposées en alternance.

7. Dispositif d'affichage (10) selon l'une des revendications précédentes,
**caractérisé en ce**
**que** la deuxième électrode présente plusieurs électrodes partielles (421) reliées galvaniquement entre elles, lesquelles sont disposées conformément à une grille unidimensionnelle ou bidimensionnelle avec un pas de grille de moins de 300 µm, de préférence de moins de 200 µm, de manière davantage préférée, de moins de 100 µm, dans lequel les électrodes partielles (421) possèdent en particulier respectivement une configuration en forme de point ou en forme de ligne, dans lequel on fait en particulier varier la largeur des électrodes partielles (421) ou les espacements de grille de la grille pour la génération d'une image à niveaux de gris, et/ou dans lequel la grille est en particulier une grille transformée géométriquement et les électrodes partielles (421) possèdent en particulier une configuration en forme de lignes ondulées.

8. Dispositif d'affichage (10) selon l'une des revendications 1 à 7,
**caractérisé en ce**
**que** les deuxième et troisième électrodes (42, 43) diffèrent de par leur espacement par rapport à la première électrode (41), sont en particulier formées par des zones de couches électriquement conductrices différentes (123, 125), lesquelles sont espacées entre elles par rapport à la normale au plan défini par la première électrode (41).

9. Dispositif d'affichage (10) selon la revendication 8,
**caractérisé en ce**
**que** la deuxième électrode (42) est disposée entre la première électrode (41) et la troisième électrode (43), et la deuxième électrode (42) et la troisième électrode (43) se recouvrent par rapport au plan défini par la couche d'affichage (122) au moins par endroits, en particulier de moins de 50 %, de manière davantage préférée de moins de 25 % et/ou que la troisième électrode (43) recouvre entièrement la deuxième électrode (42).

10. Dispositif d'affichage (10) selon l'une des revendications 8 à 9,
**caractérisé en ce**
**que** la distance entre la première et la deuxième électrode (41, 42), la distance entre la première et la troisième électrode (41, 43) et la distance entre la deuxième et la troisième électrode (42, 43) est sélectionnée de manière à ce que c23 soit inférieure à 1/(1/c12 + 1/c13), dans lequel c12 est la capacité entre la première et la deuxième électrode, c13 la capacité entre la première et la troisième électrode et c23 la capacité entre la deuxième et la troisième électrode, et/ou que la troisième électrode (43) présente des creux dans la zone de la deuxième électrode (42) et en particulier dans la zone de la deuxième électrode (42), la distance entre la première électrode (41) et la troisième électrode (43) est plus grande que dans les zones dans lesquelles la troisième électrode (43), mais non pas la deuxième électrode (42), est prévue, dans lequel en particulier d1 est à peu près d2 et d3 est nettement supérieure à d2, dans lequel d1 est la distance entre la première électrode et la deuxième électrode, d2 la distance entre la première électrode et les bosses de la troisième électrode et d3, la distance entre la première électrode et les creux de la troisième électrode.

11. Dispositif d'affichage (10) selon l'une des revendications précédentes,
**caractérisé en ce**
**que** le dispositif d'affichage (10) présente une quatrième électrode (44), dans lequel la deuxième et la quatrième électrode (42, 44) sont disposées entre la première et la troisième électrode (41, 43) et la première et la quatrième électrode (41, 44) se recouvrent au moins par endroits lors d'une observation perpendiculairement à un plan défini par la couche d'affichage (122).

12. Dispositif d'affichage (10) selon la revendication 11,
**caractérisé en ce**
**que** la quatrième électrode (44) est disposée à l'intérieur de la première zone (22), dans lequel la deuxième électrode (42) forme une première information (71) et la quatrième électrode (44) forme une deuxième information (72), et/ou qu'une cinquième électrode (45) est prévue à l'extérieur de la première zone (22) et la première et la cinquième électrode (41, 45) se recouvrent au moins par endroits lors d'une observation perpendiculairement à un plan défini par la couche d'affichage (122), et/ou que la troisième électrode (43) est prévue au moins dans les zones, non recouvertes par la deuxième et la troisième électrode (42, 44), de la première zone (22).

13. Dispositif d'affichage (10) selon l'une des revendications 11 ou 12,
**caractérisé en ce**
**que** la deuxième électrode (42) présente une pluralité de premières électrodes partielles (421) reliées galvaniquement entre elles, lesquelles sont configurées et disposées de manière à ce qu'elles forment la première information (71), que la quatrième électrode (44) présente une pluralité de deuxièmes électrodes partielles (441) reliées galvaniquement entre elles, lesquelles sont configurées et disposées de manière à ce qu'elles forment la deuxième information (72), que les premières et deuxièmes électrodes partielles (421, 441) présentent respectivement une largeur de moins de 300 µm et que les premières et deuxièmes électrodes partielles (421, 441) sont disposées de façon tramée les unes avec les autres, en particulier disposées en alternance, dans lequel en particulier les premières et deuxièmes électrodes partielles (421, 441) possèdent respectivement une configuration en forme de ligne et que les premières et deuxièmes électrodes partielles (421, 441) sont disposées selon une grille unidimensionnelle avec un pas de grille de moins de 750 µm.

14. Dispositif d'affichage (10) selon l'une des revendications 11 à 13,
**caractérisé en ce**
**qu'**à l'intérieur de la première zone (22), une cinquième électrode (45) qui est disposée sur le côté opposé à la première électrode (41) de la couche d'affichage (122) est prévue, que la troisième électrode (43) présente une pluralité de troisièmes électrodes partielles (431) reliées galvaniquement entre elles, que la cinquième électrode (45) présente une pluralité de quatrièmes électrodes partielles (451) reliées galvaniquement entre elles, que les troisièmes et quatrièmes électrodes partielles (431, 451) présentent respectivement une largeur de moins de 300 µm et que les troisièmes et quatrièmes électrodes partielles (431, 451) sont disposées de façon tramée les unes avec les autres, en particulier disposées en alternance, et/ou que le dispositif d'affichage (10) présente un redresseur, dans lequel l'une des deux sorties du redresseur est reliée à la troisième électrode (43) et l'autre des sorties du redresseur est reliée à la cinquième électrode (45), et que le dispositif d'affichage présente une source d'énergie (33), dans lequel l'une des sorties de la source d'énergie (33) est reliée à l'une des entrées du redresseur et à la deuxième électrode (42), et l'autre des sorties de la source d'énergie (33) est reliée à l'autre des entrées du redresseur et à la quatrième électrode (44), dans lequel la source d'énergie (33) est un particulier un élément piézoélectrique.

15. Dispositif d'affichage (10) selon l'une des revendications précédentes,
**caractérisé en ce**
**que** le dispositif d'affichage (10) présente un ou plusieurs éléments de sécurité optiques, lesquels sont en particulier sélectionnés parmi : un élément de sécurité à diffraction optique, un élément de sécurité contenant un système de couche mince qui génère en particulier un effet de changement de couleur en fonction d'un angle de vision, un élément de sécurité contenant des pigments variables optiquement, un élément de sécurité contenant des microlentilles, un élément de sécurité contenant des cristaux liquides.
